# EUROPÄISCHE PATENTSCHRIFT

(11) **EP 4 470 438 B1**
(45) Veröffentlichungstag und Bekanntmachung des Hinweises auf die Patenterteilung: **15.10.2025**
(21) Anmeldenummer: 24207160.3
(22) Anmeldetag: 18.04.2019
(51) Int. Cl.: A47L 9/28, A47L 9/10

(54) **BASISSTATION UND VERFAHREN ZUM BETREIBEN EINES REINIGUNGSSYSTEMS**
BASE STATION AND METHOD FOR OPERATING A CLEANING SYSTEM
STATION DE BASE ET PROCÉDÉ DE FONCTIONNEMENT D'UN SYSTÈME DE NETTOYAGE

(43) Veröffentlichungstag der Anmeldung: 04.12.2024
(62) Teilanmeldung aus: 23175213.0
(73) Patentinhaber: Vorwerk & Co. Interholding GmbH, 42275 Wuppertal (DE)
(72) Erfinder: Hackert, Georg, 44869 Bochum (DE); Kemker, Uwe, 42105 Wuppertal (DE)
(74) Vertreter: Von Rohr Patentanwälte Partnerschaft mbB

(56) Entgegenhaltungen:
- EP-A1- 3 033 982
- US-A1- 2016 106 284
- US-A1- 2018 304 462

## Beschreibung

Die vorliegende Erfindung betrifft ein Verfahren zum Betreiben eines Reinigungssystems gemäß dem Oberbegriff des Anspruchs 1 sowie eine Basisstation zum fluidischen Anschließen mehrerer mobiler Reinigungsgeräte gemäß dem Oberbegriff des Anspruchs 12.

Eine Basisstation im Sinne der vorliegenden Erfindung ist eine konstruktive, vorzugsweise stationäre, Vorrichtung zum Warten eines (mobilen) Reinigungsgeräts, insbesondere um einen Sammelbehälter des Reinigungsgeräts zu entleeren bzw. abzusaugen.

Die EP 3 033 982 A1 offenbart eine derartige Basisstation zum Reinigen und/oder Entleeren eines Handstaubsaugers, wobei die Basisstation mit einem optionalen Adaptermodul verbindbar ist, um zusätzlich zum Handstaubsauger einen Saugroboter an die Basisstation anzuschließen.

Die US 2018/0304462 A1 offenbart ein Reinigungssystem mit einer bewegbaren Basisstation und mehreren Reinigungseinheiten, die jeweils mittels einer Leitung mit Strom und einem Reinigungsmittel versorgt werden.

Der vorliegenden Erfindung liegt die Aufgabe zugrunde, ein verbessertes Verfahren zum Betreiben eines Reinigungssystems, eine verbesserte Basisstation zum fluidischen Anschluss mehrerer Reinigungsgeräte sowie eine verbesserte Filtereinrichtung für eine Basisstation anzugeben, wodurch eine schnelle, flexible, energieeffiziente und/oder benutzerfreundliche Wartung der Reinigungsgeräte ermöglicht oder unterstützt wird. Insbesondere soll die Basisstation eine einfache, robuste und/oder kompakte Bauweise aufweisen.

Die der Erfindung zugrundeliegende Aufgabe wird durch ein Verfahren gemäß Anspruch 1 oder eine Basisstation gemäß Anspruch 12 gelöst. Vorteilhafte Weiterbildungen sind Gegenstand der Unteransprüche.

Ein Reinigungssystem im Sinne der vorliegenden Erfindung ist ein System mit mehreren Komponenten zur Reinigung von Flächen, insbesondere Fußböden, im Innen- und/oder Außenbereich. Ein derartiges Reinigungssystem weist mindestens ein, vorzugsweise mehrere, (mobile) Reinigungsgeräte und eine vorzugsweise stationäre Basisstation zur Wartung der Reinigungsgeräte auf. Die Reinigungsgeräte werden nach der Benutzung bzw. einem Reinigungsvorgang an die Basisstation angeschlossen, um die Reinigungsgeräte vorzugsweise automatisiert bzw. selbsttätig (elektrisch) zu laden und/oder vorzugsweise automatisiert bzw. selbsttätig zu entleeren bzw. auszusaugen.

Ein Reinigungsgerät im Sinne der vorliegenden Erfindung ist vorzugsweise ein handgeführter Staubsauger, ein insbesondere verfahrbarer Bodenstaubsauger, ein Rüsselstaubsauger oder Stab- bzw. Stielstaubsauger, oder ein (teil-)autonomer bzw. selbstfahrender oder selbstfliegender Staubsaugerroboter, im Folgenden Saugroboter genannt.

Es kann sich bei einem Reinigungsgerät im Sinne der vorliegenden Erfindung aber auch um eine sonstige Vorrichtung zur Reinigung und/oder Pflege von Flächen, insbesondere Fußböden, handeln. Beispielsweise sind auch Bodenwischgeräte bzw. -roboter, Poliergeräte bzw. -roboter, Fensterputzgeräte bzw. -roboter oder Rasenmähgeräte bzw. -roboter grundsätzlich als Reinigungsgeräte im Sinne der vorliegenden Erfindung zu verstehen.

Gemäß einem Aspekt der vorliegenden Erfindung werden mehrere Reinigungsgeräte gleichzeitig/simultan mittels der Basisstation gewartet, insbesondere entleert bzw. ausgesaugt und/oder mit einem Reinigungsmittel befüllt, besonders bevorzugt automatisch bzw. selbsttätig.

Die vorschlagsgemäße Basisstation ist folglich zum gleichzeitigen/simultanen Warten, insbesondere Entleeren/Aussaugen und/oder Befüllen, der Reinigungsgeräte ausgebildet.

Vorzugsweise weist die Basisstation eine Arbeitsmaschine, insbesondere ein Gebläse und/oder eine Pumpe, und einen Behälter auf, um gleichzeitig Sauggut aus den Reinigungsgeräten zu saugen und/oder ein Reinigungsmittel in die Reinigungsgeräte zu pumpen.

Auf diese Weise wird eine besonders schnelle bzw. effiziente Wartung der Reinigungsgeräte ermöglicht und die Verfügbarkeit der Reinigungsgeräte erhöht.

Gemäß einem weiteren, auch unabhängig realisierbaren Aspekt der vorliegenden Erfindung werden die Reinigungsgeräte gemäß einer - insbesondere vordefinierten bzw. elektronisch gespeicherten - Priorisierung von der Basisstation bzw. selbsttätig/automatisch gewartet, insbesondere entleert/ausgesaugt bzw. befüllt, und/oder elektrisch geladen.

Vorzugsweise wird ein erstes, insbesondere (teil-)autonomes und/oder selbstfahrendes bzw. selbstfliegendes, Reinigungsgerät, wie ein Saugroboter, nachrangig und/oder ein zweites, insbesondere handgeführtes, Reinigungsgerät vorrangig von der Basisstation entleert bzw. ausgesaugt und/oder befüllt.

Beispielsweise kann vorgesehen sein, ein Entleeren/Aussaugen und/oder Befüllen des ersten Reinigungsgeräts zu unterbrechen, wenn das zweite Reinigungsgerät an die Basisstation (fluidisch) angeschlossen wird. Zusätzlich oder alternativ kann vorgesehen sein, ein Entleeren/Aussaugen und/oder Befüllen des ersten Reinigungsgeräts erst dann zu starten, wenn das zweite Reinigungsgerät vollständig geladen, entleert/ausgesaugt und/oder befüllt ist oder von einem Nutzer benutzt wird.

Durch die Priorisierung wird die Verfügbarkeit des priorisierten Reinigungsgeräts, insbesondere eines handgeführten Reinigungsgeräts, und somit die Benutzerfreundlichkeit erhöht.

Bei einer besonders bevorzugten Verfahrensvariante werden die Reinigungsgeräte wahlweise nacheinander bzw. gemäß einer Priorisierung oder gleichzeitig/simultan entleert/ausgesaugt und/oder befüllt.

Die Basisstation weist vorzugsweise ein Steuergerät und eine insbesondere gesteuerte bzw. mit dem Steuergerät verbundene Absperreinrichtung, wie eine Absperrklappe, auf, um wahlweise das erste Reinigungsgerät, das zweite Reinigungsgerät und/oder beide Reinigungsgeräte fluidisch mit der Basisstation bzw. dem Behälter der Basisstation zu verbinden.

Die vorschlagsgemäße Filtereinrichtung für die Basisstation weist vorzugsweise mehrere Anschlussöffnungen zum Befüllen des Filters auf. Vorzugsweise weist die Filtereinrichtung eine erste Anschlussöffnung für das erste Reinigungsgerät und eine zweite (separate) Anschlussöffnung für das zweite Reinigungsgerät auf. Auf diese Weise ist es möglich, die Filtereinrichtung gleichzeitig/simultan für mehrere Reinigungsgeräte bzw. fluidische Anschlüsse zu verwenden und/oder von unterschiedlichen Seiten zu befüllen.

Eine Filtereinrichtung im Sinne der vorliegenden Erfindung ist eine Einrichtung zur Filtration eines Fluids, insbesondere von Luft, vorzugsweise um Partikel aus dem Fluid abzuscheiden. Vorzugsweise ist eine Filtereinrichtung im Sinne der vorliegenden Erfindung ein Einweg- bzw. Wegwerfartikel. Beispielsweise kann eine Filtereinrichtung im Sinne der vorliegenden Erfindung als Filtertüte, Filterbeutel oder Filterkartusche ausgebildet sein.

Die vorschlagsgemäße Filtervorrichtung ist vorzugsweise ausziehbar bzw. expandierbar ausgebildet und weist - zumindest im expandierten Zustand - eine längliche, insbesondere zylinderartige, Form auf.

Die Anschlussöffnungen der Filtereinrichtung sind vorzugsweise jeweils auf einer Stirnseite der Filtereinrichtung angeordnet, insbesondere derart, dass das zu reinigende Fluid axial bzw. von oben und von unten in die Filtereinrichtung strömen kann. Dies ermöglicht eine besonders kompakte Bauweise der Basisstation und einen einfachen Ein- und Ausbau der Filtereinrichtung.

Optional ist die Filtereinrichtung mit einer Trennwand ausgestattet, die die Filtereinrichtung in zwei Kammern unterteilt. Auf diese Weise wird verhindert, dass sich das gesamte Sauggut unten bzw. an der ersten Anschlussöffnung der Filtereinrichtung sammelt und somit das Aussaugen des dort angeschlossenen Reinigungsgeräts beeinträchtigt wird.

Die vorgenannten Aspekte, Merkmale und Verfahrensschritte der Erfindung sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination bzw. Reihenfolge realisiert werden.

Weitere Aspekte, Vorteile, Merkmale und Eigenschaften der vorliegenden Erfindung ergeben sich aus den Ansprüchen und der nachfolgenden Beschreibung bevorzugter Ausführungsformen anhand der Zeichnung. Es zeigt:
- Fig. 1: eine schematische Seitenansicht eines vorschlagsgemäßen Reinigungssystems mit einer vorschlagsgemäßen Basisstation gemäß einer ersten Ausführungsform und mehreren daran angeschlossenen Reinigungsgeräten in der Anschlussposition;
- Fig. 2: eine schematische Seitenansicht des Reinigungssystems mit der vorschlagsgemäßen Basisstation gemäß einer zweiten Ausführungsform;
- Fig. 3A: eine perspektivische Darstellung der Basisstation gemäß Fig. 2 beim Einsetzen einer vorschlagsgemäßen Filtereinrichtung;
- Fig. 3B: eine perspektivische Darstellung der Basisstation gemäß Fig. 2 mit eingesetzter und teilexpandierter Filtereinrichtung; und
- Fig. 3C: eine perspektivische Darstellung der Basisstation gemäß Fig. 2 mit vollständig expandierter Filtereinrichtung.

In den teilweise nicht maßstabsgerechten, nur schematischen Figuren werden für die gleichen, gleichartige oder ähnliche Bauteile und Komponenten dieselben Bezugszeichen verwendet, wobei sich entsprechende oder vergleichbare Eigenschaften und Vorteile ergeben, auch wenn von einer wiederholten Beschreibung abgesehen wird.

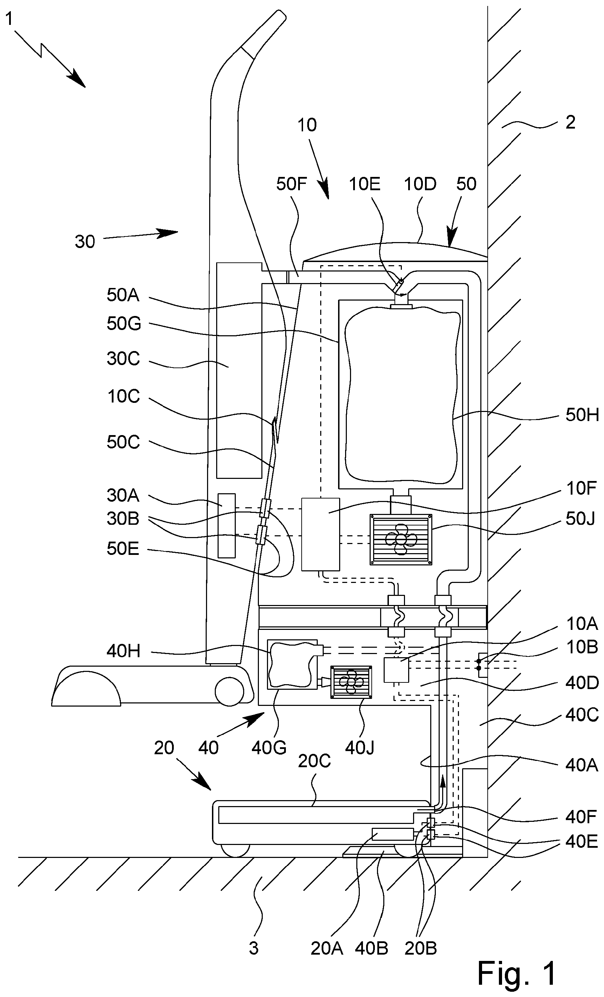

Fig. 1 zeigt schematisch ein vorschlagsgemäßes Reinigungssystem 1 mit einer vorschlagsgemäßen Basisstation 10.

Die Darstellung gemäß Fig. 1 zeigt das Reinigungssystem 1 bzw. die Basisstation 10 im eingebauten/montierten Zustand bzw. in der üblichen Gebrauchslage, in dem bzw. der die Basisstation 10 (rückseitig) an einer Wand 2 anliegt bzw. befestigt ist und vorzugsweise (bodenseitig) auf einem Boden 3 aufliegt bzw. bodennah endet oder angeordnet ist.

Das Reinigungssystem 1 ist vorzugsweise mit mehreren Komponenten ausgestattet.

Vorzugsweise weist das Reinigungssystem 1 - zusätzlich zu der Basisstation 10 - mindestens ein (mobiles) Reinigungsgerät 20, 30 auf, wobei das Reinigungsgerät 20, 30 mit der Basisstation 10 fluidisch und/oder elektrisch koppelbar ist, insbesondere um das Reinigungsgerät 20, 30 zu entleeren/auszusaugen und/oder elektrisch zu laden, wie im Folgenden noch näher erläutert wird.

Bei der in Fig. 1 dargestellten Ausführungsform weist das Reinigungssystem 1 mehrere, hier zwei unterschiedliche, Reinigungsgeräte 20, 30 auf, wobei vorliegend ein erstes Reinigungsgerät 20 als Saugroboter und ein zweites Reinigungsgerät 30 als Handstaubsauger ausgebildet ist. Hier sind jedoch auch andere Konstellationen denkbar, beispielsweise bei denen das Reinigungssystem 1 mehrere Saugroboter aufweist.

Im Folgenden wird die Verwendung der Basisstation 10 mit zwei Reinigungsgeräten 20, 30 beschrieben. Es ist jedoch auch möglich, dass das Reinigungssystem 1 lediglich ein Reinigungsgerät 20, 30 aufweist bzw. die Basisstation 10 lediglich mit einem Reinigungsgerät 20, 30 verwendet wird.

Das Reinigungssystem 1 wird insbesondere in Innenräumen eingesetzt bzw. zur Reinigung von Innenräumen verwendet. Es ist aber auch grundsätzlich möglich, das Reinigungssystem 1 in Außenräumen/-bereichen einzusetzen bzw. zur Reinigung von Außenräumen bzw. -bereichen zu verwenden.

Wie eingangs bereits erläutert, ist die Basisstation 10 zum (elektrischen) Aufladen und/oder zur (automatisierten) Wartung, insbesondere zum Entleeren bzw. Aussaugen und/oder Befüllen, eines oder mehrerer Reinigungsgeräte 20, 30 ausgebildet. Zu diesem Zweck werden die Reinigungsgeräte 20, 30 mit der Basisstation 10 gekoppelt, wodurch eine fluidische und/oder elektrische Verbindung zwischen der Basisstation 10 und den Reinigungsgeräten 20, 30 hergestellt wird.

Das Anschließen/Koppeln der Reinigungsgeräte 20, 30 an die Basisstation 10 kann manuell - beispielsweise im Falle eines Handstaubsaugers - oder automatisch bzw. selbsttätig - beispielsweise im Falle eines Saugroboters - erfolgen. Bei den gezeigten Ausführungsformen ist vorgesehen, dass sich das erste Reinigungsgerät 20 automatisch bzw. selbsttätig nach einem Reinigungsvorgang mit der Basisstation 10 verbindet und das zweite Reinigungsgerät 30 manuell bzw. von einem Nutzer in die Basisstation 10 gehängt wird, um die Reinigungsgeräte 20, 30 mittels der Basisstation 10 elektrisch aufzuladen und/oder abzusaugen bzw. zu befüllen.

Die Basisstation 10 ist vorzugsweise länglich und/oder kastenförmig bzw. schrankartig ausgebildet.

Es ist bevorzugt, dass die Basisstation 10 fest bzw. unbeweglich mit der Wand 2 verbunden wird. Die Basisstation 10 kann jedoch grundsätzlich auch als freistehende und/oder mobile bzw. verfahrbare Vorrichtung ausgebildet sein.

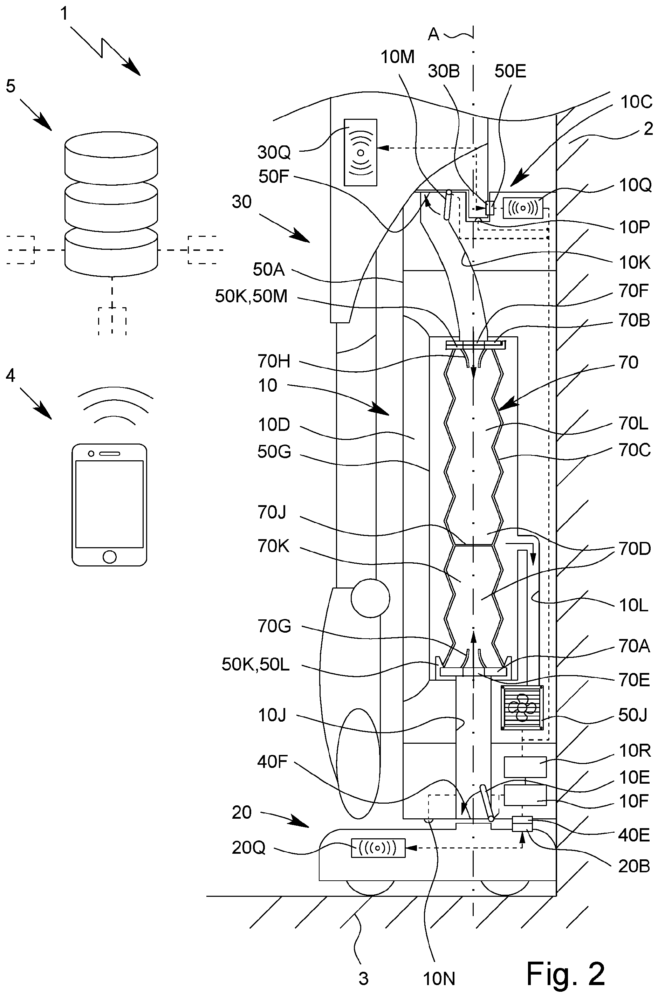

Vorzugsweise wird die Basisstation 10 derart an der Wand 2 montiert, dass die Basisstation 10 im eingebauten Zustand bodenseitig auf dem Boden 3 aufliegt und flächig an der Wand 2 anliegt. Hier sind jedoch auch andere Lösungen möglich, insbesondere bei denen die Basisstation 10 im eingebauten Zustand beabstandet zum Boden 3 angeordnet bzw. an der Wand 2 aufgehängt ist, wie in Fig. 2 dargestellt.

Die Basisstation 10 ist vorzugsweise mehrteilig bzw. modular aufgebaut. Besonders bevorzug weist die Basisstation 10 mehrere Module auf oder ist um ein oder mehrere Module erweiterbar.

Vorzugsweise weist die Basisstation 10 ein Bodenmodul 40 und/oder ein Kopfmodul 50 auf, insbesondere wobei das Kopfmodul 50 in der Gebrauchslage bzw. im eingebauten Zustand (unmittelbar) oberhalb des Bodenmoduls 40 angeordnet ist.

Vorzugsweise ist das Bodenmodul 40 zum elektrischen und/oder fluidischen Anschließen des ersten Reinigungsgeräts 20 und/oder das Kopfmodul 50 zum elektrischen und/oder fluidischen Anschließen des zweiten Reinigungsgeräts 30 ausgebildet. Es ist also vorgesehen, das erste Reinigungsgerät 20 mittels des Bodenmoduls 40 und/oder das zweite Reinigungsgerät 30 mittels des Kopfmoduls 50 (elektrisch) zu laden, zu befüllen und/oder zu entleeren, insbesondere von der Seite, von unten und/oder von oben.

Das Bodenmodul 40 ist vorzugsweise dazu ausgebildet, das erste Reinigungsgerät 20 mit elektrischer Energie zu versorgen bzw. einen in Fig. 1 nur schematisch angedeuteten Akkumulator 20A des ersten Reinigungsgeräts 20 aufzuladen, wenn und/oder sobald das Reinigungsgerät 20 an die Basisstation 10 angeschlossen ist.

Fig. 1 zeigt das Reinigungssystem 1 bzw. das erste Reinigungsgeräte 20 in der Koppel- bzw. Anschlussposition, in der das Reinigungsgerät 20 elektrisch an die Basisstation 10 bzw. das Bodenmodul 40 angeschlossen ist.

Vorzugsweise bildet das Bodenmodul 40 eine Aufnahme 40A für das erste Reinigungsgerät 20, um das erste Reinigungsgerät 20 zumindest teilweise aufzunehmen. Das erste Reinigungsgerät 20 kann also zumindest teilweise in das Bodenmodul 40 hineinfahren, um eine fluidische und/oder elektrische Verbindung mit der Basisstation 10 bzw. dem Bodenmodul 40 herzustellen.

Vorzugsweise weist das Bodenmodul 40 ein insbesondere flaches bzw. rampenförmiges Fußteil 40B, eine Rückwand 40C und/oder ein insbesondere kastenartiges Oberteil 40D auf, vorzugsweise wobei die Aufnahme 40A nach unten durch das Fußteil 40B, rückwandseitig durch die Rückwand 40C und nach oben durch das Oberteil 40D begrenzt ist.

Im eingebauten Zustand der Basisstation 10 liegt das Fußteil 40B auf dem Boden 3 auf und die Rückwand 40C vorzugsweise an der Wand 2 an.

Um die Basisstation 10 bzw. das Bodenmodul 40 elektrisch mit dem ersten Reinigungsgerät 20 zu verbinden, weist die Basisstation 10 bzw. das Bodenmodul 40 einen (ersten) elektrischen Anschluss 40E auf.

Der elektrische Anschluss 40E ist vorzugsweise durch einen oder mehrere elektrische Kontakte oder - insbesondere für eine drahtlose Energieübertragung - durch eine oder mehrere Spulen gebildet, wobei die elektrischen Kontakte oder Spulen auf oder in dem Fußteil 40B, der Rückwand 40C und/oder dem Oberteil 40D, insbesondere auf einer der Aufnahme 40A zugewandten Seite des Fußteils 40B, der Rückwand 40C und/oder des Oberteils 40D, angeordnet sind.

Das erste Reinigungsgerät 20 weist einen zu dem elektrischen Anschluss 40E des Bodenmoduls 40 korrespondierenden elektrischen Anschluss 20B auf, der vorzugsweise durch einen oder mehrere elektrische Kontakte oder - insbesondere für eine drahtlose Energieübertragung - durch eine oder mehrere Spulen auf einer Außenseite und/oder einer Bodenseite des Reinigungsgeräts 20 gebildet ist.

Die Basisstation 10, insbesondere das Bodenmodul 40, ist mit einem optionalen Netzteil 10A - vorzugsweise mit einer entsprechenden Ladeelektronik - und/oder einem Stromanschluss 10B zum Anschluss an ein nur schematisch angedeutetes Stromnetz ausgestattet, um eine Stromversorgung des ersten Reinigungsgeräts 20, des zweiten Reinigungsgeräts 30, des Bodenmoduls 40 und/oder des Kopfmoduls 50 zu ermöglichen.

Die Basisstation 10, insbesondere das Kopfmodul 50, ist vorzugsweise dazu ausgebildet, das zweite Reinigungsgerät 30 zu halten bzw. teilweise aufzunehmen. Insbesondere ist das zweite Reinigungsgerät 30 an dem Kopfmodul 50 befestigbar bzw. in das Kopfmodul 50 einhängbar.

Vorzugsweise weist die Basisstation 10, insbesondere das Kopfmodul 50, eine Halterung 10C auf, um das zweite Reinigungsgerät 30 zu halten, insbesondere form- und/oder kraftschlüssig und/oder oberhalb des bzw. beabstandet zum Boden 3.

Bei der dargestellten Ausführungsform ist die Halterung 10C durch einen Haken gebildet, wobei das zweite Reinigungsgerät 30 einen zum Haken korrespondierenden Bügel aufweist, um das Reinigungsgerät 30 einzuhängen. Hier sind jedoch auch andere Lösungen möglich.

Das Kopfmodul 50 weist ein insbesondere kastenförmiges Gehäuse 50A auf, vorzugsweise wobei das Gehäuse 50A die Halterung 10C aufweist oder bildet.

Das zweite Reinigungsgerät 30 ist vorzugsweise an einer Vorderseite 50C des Kopfmoduls 50 befestigbar. Insbesondere weist die Vorderseite 50C die Halterung 10C auf. Es sind jedoch auch Lösungen möglich, bei denen das zweite Reinigungsgerät 30 seitlich an die Basisstation 10 bzw. das Kopfmodul 50 angeschlossen bzw. gehängt wird.

Vorzugsweise wird die elektrische Verbindung zwischen der Basisstation 10 bzw. dem Kopfmodul 50 und dem zweiten Reinigungsgerät 30 durch bzw. zeitgleich mit Anhängen bzw. mechanischem Koppeln des Reinigungsgeräts 30 an die Basisstation 10 bzw. das Kopfmodul 50 hergestellt.

Um eine elektrische Verbindung zwischen der Basisstation 10 bzw. dem Kopfmodul 50 und dem zweiten Reinigungsgerät 30 herzustellen, weist die Basisstation 10 bzw. das Kopfmodul 50 einen (zweiten) elektrischen Anschluss 50E auf.

Der elektrische Anschluss 50E ist vorzugsweise durch einen oder mehrere elektrische Kontakte oder - insbesondere für eine drahtlose Energieübertragung - durch eine oder mehrere Spulen gebildet. Vorzugsweise sind die elektrischen Kontakte oder Spulen auf oder in der Vorderseite 50C des Kopfmoduls 50 angeordnet.

Bei einer besonders bevorzugten Ausführungsform ist der elektrische Anschluss 50E in die Halterung 10C integriert (wie in Fig. 2 dargestellt).

Das zweite Reinigungsgerät 30 weist vorzugsweise einen Akkumulator 30A und einen zum elektrischen Anschluss 50E des Kopfmoduls 50 korrespondierenden elektrischen Anschluss 30B auf, vorzugsweise wobei der elektrische Anschluss 30B über eine oder mehrere elektrische Leitungen mit dem Akkumulator 30A des zweiten Reinigungsgeräts 30 verbunden ist.

Der elektrische Anschluss 30B des zweiten Reinigungsgeräts 30 ist vorzugsweise durch einen oder mehrere elektrische Kontakte oder - insbesondere für eine drahtlose Energieübertragung - durch eine oder mehrere Spulen auf einer Außenseite des zweiten Reinigungsgeräts 30 gebildet.

Die elektrische Verbindung zwischen der Basisstation 10 bzw. dem Kopfmodul 50 und dem zweiten Reinigungsgerät 30 bzw. dessen Akkumulator 30A wird durch - drahtloses oder drahtgebundenes - Koppeln des elektrischen Anschlusses 30B des zweiten Reinigungsgeräts 30 an den elektrischen Anschluss 50E des Kopfmoduls 50 hergestellt. Besonders bevorzugt wird die elektrische Verbindung selbsttätig hergestellt, wenn das zweite Reinigungsgerät 30 an die Basisstation 10 bzw. das Kopfmodul 50 gehängt bzw. mechanisch gekoppelt wird.

In der in Fig. 1 gezeigten Anschlussposition ist das zweite Reinigungsgerät 30 elektrisch an die Basisstation 10 bzw. das Kopfmodul 50, insbesondere den elektrischen Anschluss 50E, angeschlossen, sodass das zweite Reinigungsgerät 30 bzw. der Akkumulator 30A des zweiten Reinigungsgeräts 30 elektrisch mit der Basisstation 10 bzw. dem Kopfmodul 50 verbunden ist und der Akkumulator 30A mittels der Basisstation 10 geladen werden kann.

Vorzugsweise wird der elektrische Anschluss 50E vom ersten Netzteil 10A mit Strom versorgt. Optional ist (auch) das Kopfmodul 50 mit einem zweiten bzw. eigenen Netzteil und/oder zweiten bzw. eigenen Stromanschluss ausgestattet.

Es sind auch Lösungen insbesondere für den Einsatz in Außenbereich möglich, bei denen das Reinigungssystem 1 bzw. die Basisstation 10 als autarkes bzw. netzunabhängiges Reinigungssystem ausgebildet ist. Beispielsweise kann das Reinigungssystem 1 bzw. die Basisstation 10 ein oder mehrere Solarmodule und/oder Akkumulatoren aufweisen bzw. als photovoltaisches Inselsystem ausgebildet sein.

Das Bodenmodul 40 und das Kopfmodul 50 sind vorzugsweise elektrisch miteinander verbunden, insbesondere derart, dass der elektrische Anschluss 40E des Bodenmoduls 40 und der elektrische Anschluss 50E des Kopfmoduls 50 elektrisch mit dem (gemeinsamen) Netzteil 10A verbunden sind.

Wie bereits erläutert, ist die Basisstation 10 vorzugsweise - zusätzlich oder alternativ zum elektrischen Anschließen - zum fluidischen, insbesondere pneumatischen, Anschließen mindestens eines, vorzugsweise mehrerer, Reinigungsgeräte 20, 30 ausgebildet.

Um die Basisstation 10 bzw. das Bodenmodul 40 fluidisch mit dem ersten Reinigungsgerät 20 zu verbinden, ist die Basisstation 10 bzw. das Bodenmodul 40 vorzugsweise mit einem (ersten) fluidischen, insbesondere pneumatischen, Anschluss 40F ausgestattet.

Der fluidische Anschluss 40F der Basisstation 10 bzw. des Bodenmoduls 40 ist vorzugsweise im Fußteil 40B, in der Rückwand 40C oder im Oberteil 40D angeordnet und/oder durch einen Stutzen, eine Öffnung o. dgl. im Fußteil 40B, in der Rückwand 40C oder im Oberteil 40D gebildet. Vorzugsweise ist der fluidische Anschluss 40F unmittelbar neben dem elektrischen Anschluss 40E angeordnet.

Bei der in Fig. 1 dargestellten Ausführungsform weist die Rückwand 40C den fluidischen Anschluss 40F auf. Das erste Reinigungsgerät 20 kann sich also seitlich fluidisch mit der Basisstation 10 bzw. dem Bodenmodul 40 verbinden. Hier sind jedoch auch andere Lösungen möglich, insbesondere bei denen der fluidische Anschluss 40F in das Fußteil 40B oder das Oberteil 40D integriert ist. In diesem Fall kann sich das erste Reinigungsgerät 20 unten bzw. oben fluidisch mit der Basisstation 10 bzw. dem Bodenmodul 40 verbinden, wenn es auf das Fußteil 40B fährt bzw. sich unterhalb des Bodenmoduls 40 befindet.

Es ist bevorzugt, dass sich das erste Reinigungsgerät 20 sowohl fluidisch als auch elektrisch mit der Basisstation 10 bzw. dem Bodenmodul 40 (automatisch) verbindet, wenn es auf das Fußteil 40B und/oder gegen die Rückwand 40C fährt bzw. sich in der Anschlussposition befindet.

Die Basisstation 10 bzw. das Bodenmodul 40 weist vorzugsweise einen (ersten) Behälter 40G, ein (erstes) Filter 40H und/oder eine (erste) Arbeitsmaschine 40J, wie ein Gebläse oder eine Pumpe, auf, vorzugsweise wobei der fluidische Anschluss 40F fluidisch mit dem Behälter 40G, dem Filter 40H und/oder der Arbeitsmaschine 40J verbunden ist.

Der Behälter 40G, das Filter 40H und/oder die Arbeitsmaschine 40J sind/ist vorzugsweise im Oberteil 40D des Bodenmoduls 40 angeordnet.

Bei der dargestellten Ausführungsform ist das Filter 40H als Filterbeutel ausgebildet, der im Behälter 40G angeordnet und an einem Einlass des Behälters 40G angebracht ist.

Durch das Anschließen des ersten Reinigungsgeräts 20 an die Basisstation 10 bzw. das Bodenmodul 40 wird vorzugsweise eine fluidische Verbindung eines nur schematisch angedeuteten Sammelbehälters 20C des ersten Reinigungsgeräts 20 mit der Basisstation 10 bzw. dem Bodenmodul 40, insbesondere dem Behälter 40G bzw. der Arbeitsmaschine 40J, hergestellt.

Mittels der Arbeitsmaschine 40J ist es möglich, ein Fluid zwischen dem ersten Reinigungsgerät 20 bzw. dessen Sammelbehälter 20C und der Basisstation 10 bzw. dessen Behälter 40G zu fördern oder umgekehrt.

Bei der dargestellten Ausführungsform ist die Arbeitsmaschine 40J als Gebläse ausgebildet bzw. dazu ausgebildet, Sauggut aus dem Sammelbehälter 20C des ersten Reinigungsgeräts 20 in den Behälter 40G der Basisstation 10 zu fördern bzw. den Sammelbehälter 20C auszusaugen.

In der Anschlussposition des ersten Reinigungsgeräts 20 ist das Reinigungsgerät 20 also fluidisch, besonders bevorzugt sowohl fluidisch als auch elektrisch, mit der Basisstation 10, insbesondere dem Basismodul 40, verbunden, insbesondere derart, dass der Sammelbehälter 20C des ersten Reinigungsgeräts 20 entleert bzw. befüllt und/oder der Akkumulator 20A geladen werden kann.

Der Behälter 40G weist vorzugsweise ein Volumen auf, das größer als das Volumen des Sammelbehälters 20C des ersten Reinigungsgeräts 20 ist, vorzugsweise um das Doppelte oder Dreifache, sodass der gesamte Inhalt des Sammelbehälters 20C vom Behälter 40G aufgenommen werden kann.

Zusätzlich oder alternativ zum Bodenmodul 40 ist das Kopfmodul 50 zum fluidischen Anschließen eines Reinigungsgeräts 20 bzw. 30, hier des zweiten Reinigungsgeräts 30, ausgebildet.

Zu diesem Zweck weist die Basisstation 10 bzw. das Kopfmodul 50 einen (zweiten) fluidischen, insbesondere pneumatischen, Anschluss 50F auf, vorzugsweise wobei der fluidische Anschluss 50F durch eine Öffnung, einen Stutzen o. dgl. auf der Vorderseite 50C des Kopfmoduls 50 gebildet ist.

Der fluidische Anschluss 50F ist vorzugsweise unmittelbar neben dem elektrischen Anschluss 50E des Kopfmoduls 50 angeordnet.

Bei einer besonders bevorzugten Ausführungsform ist der fluidische Anschluss 50F des Kopfmoduls 50 in die Halterung 10C für das zweite Reinigungsgerät 30 integriert (wie in Fig. 2 dargestellt).

Die Basisstation 10 bzw. das Kopfmodul 50 weist vorzugsweise einen (zweiten) Behälter 50G, ein (zweites) Filter 50H und/oder eine (zweite) Arbeitsmaschine 50J, wie ein Gebläse oder eine Pumpe, auf, vorzugsweise wobei der fluidische Anschluss 50F fluidisch mit dem Behälter 50G, dem Filter 50H und/oder der Arbeitsmaschine 50J verbunden ist.

In der Anschlussposition des zweiten Reinigungsgeräts 30 ist das Reinigungsgerät 30 fluidisch, besonders bevorzugt sowohl fluidisch als auch elektrisch, mit der Basisstation 10, insbesondere dem Kopfmodul 50, verbunden, insbesondere derart, dass ein Sammelbehälter 30C des zweiten Reinigungsgeräts 30 entleert bzw. befüllt und/oder der Akkumulator 30A geladen werden kann.

Wie bereits im Zusammenhang mit der elektrischen Verbindung zwischen der Basisstation 10 und dem zweiten Reinigungsgerät 30 beschrieben, wird vorzugsweise auch die optionale fluidische Verbindung zwischen der Basisstation 10 bzw. dem Kopfmodul 50 und dem zweiten Reinigungsgerät 30 bzw. dessen Sammelbehälter 30C selbsttätig hergestellt, wenn das zweite Reinigungsgerät 30 in die Basisstation 10 bzw. das Kopfmodul 50 eingehängt wird.

Das Filter 50H ist vorzugsweise als Filterbeutel ausgebildet und/oder im Behälter 50G angeordnet. Vorzugsweise ist das Filter 50H mit einem Einlass des Behälters 50G verbunden bzw. daran befestigt.

Mittels der Arbeitsmaschine 50J ist es möglich, ein Fluid vom zweiten Reinigungsgerät 30 bzw. dessen Sammelbehälter 30C zu der Basisstation 10 bzw. dessen Behälter 50G zu fördern oder umgekehrt.

Bei der dargestellten Ausführungsform ist die Arbeitsmaschine 50J als Gebläse ausgebildet und/oder dazu ausgebildet, den Druck im Behälter 50G zu reduzieren und somit Sauggut aus dem Sammelbehälter 30C des zweiten Reinigungsgeräts 30 in den Behälter 50G zu fördern bzw. den Sammelbehälter 30C auszusaugen.

Vorzugsweise ist die Basisstation 10 bzw. das Kopfmodul 50 mit einer Klappe 10D ausgestattet, um die Basisstation 10, insbesondere das Kopfmodul 50 bzw. den Behälter 50G und/oder das Bodenmodul 40 bzw. den Behälter 40G, zu öffnen, zu entleeren und/oder das Filter 50H bzw. 40H zu wechseln.

Die Klappe 10D ist bei der dargestellten Ausführungsform als abnehmbarer oder verschwenkbarer Deckel ausgebildet. Es ist aber auch möglich, beispielsweise die Vorderseite 50C mit der Klappe 10D zu versehen, wie in Fig. 2 dargestellt.

Durch die fluidische Verbindung zwischen der Basisstation 10 und den Reinigungsgeräten 20, 30 ist es möglich, die Reinigungsgeräte 20, 30 in der Anschlussposition zu befüllen oder zu entleeren, insbesondere auszusaugen.

Beispielsweise kann über den fluidischen Anschluss 40F des Bodenmoduls 40 Sauggut aus dem Sammelbehälter 20C des ersten Reinigungsgeräts 20 und/oder über den fluidischen Anschluss 50F des Kopfmoduls 50 Sauggut aus dem Sammelbehälter 30C des zweiten Reinigungsgeräts 30 abgesaugt und in den Behälter 40G des Bodenmoduls 40 bzw. in den Behälter 50G des Kopfmoduls 50 überführt werden. Auf diese Weise kann ein manuelles Entleeren der Reinigungsgeräte 20, 30 entfallen.

Es ist aber auch möglich, dass über den fluidischen Anschluss 40F des Bodenmoduls 40 und/oder über den fluidischen Anschluss 50F des Kopfmoduls 50 eine Flüssigkeit, wie ein Reinigungsmittel, in den Sammelbehälter 20C des ersten Reinigungsgeräts 20 bzw. in den Sammelbehälter 30C des zweiten Reinigungsgeräts 30 gefördert bzw. gepumpt wird. In diesem Fall ist bzw. sind die Arbeitsmaschine(n) 40J bzw. 50J vorzugsweise (jeweils) als Pumpe(n) ausgebildet.

Das Bodenmodul 40 und das Kopfmodul 50 sind vorzugsweise fluidisch miteinander verbunden oder verbindbar, insbesondere um das erste Reinigungsgerät 20 mit dem Kopfmodul 50 oder das zweite Reinigungsgerät 30 mit dem Bodenmodul 40 fluidisch zu verbinden bzw. mittels des Bodenmoduls 40 (auch) das zweite Reinigungsgerät 30 oder mittels des Kopfmoduls 50 (auch) das erste Reinigungsgerät 20 zu entleeren oder zu befüllen.

Besonders bevorzugt sind der fluidische Anschluss 40F des Bodenmoduls 40 und der fluidische Anschluss 50F des Kopfmoduls 50 fluidisch mit einem gemeinsamen Behälter bzw. einer gemeinsamen Arbeitsmaschine, insbesondere dem Behälter 40G bzw. der Arbeitsmaschine 40J des Bodenmoduls 40 oder dem Behälter 50G bzw. der Arbeitsmaschine 50J des Kopfmoduls 50, verbunden, um die Reinigungsgeräte 20, 30 mittels des gemeinsamen Behälters und/oder der gemeinsamen Arbeitsmaschine zu entleeren oder zu befüllen.

Bei der in Fig. 1 dargestellten Konfiguration sind beide Reinigungsgeräte 20, 30 fluidisch mit dem Kopfmodul 50 bzw. dessen Behälter 50G und/oder dessen Arbeitsmaschine 50J verbunden, sodass der Inhalt des Sammelbehälters 20C des ersten Reinigungsgeräts 20 und der Inhalt des Sammelbehälters 30C des zweiten Reinigungsgeräts 30 mittels der (gemeinsamen) Arbeitsmaschine 50J in den Behälter 50G gefördert werden kann. Alternativ könnten beide Reinigungsgeräte 20, 30 fluidisch mit dem Bodenmodul 40 bzw. dessen Behälter 40G und/oder dessen Arbeitsmaschine 40J verbunden sein.

Der Behälter 50G bzw. das Filter 50H weist einen Einlass auf, wobei bei der dargestellten Ausführungsform beide Reinigungsgeräte 20, 30 bzw. beide fluidischen Anschlüsse 40F, 50F fluidisch bzw. über entsprechende Leitungen mit dem Einlass verbunden sind.

Vorzugsweise weist die Basisstation 10 eine optionale (gesteuerte) Absperreinrichtung 10E, wie eine Absperrklappe oder ein Ventil, auf, um den Luftstrom und/oder die Luftführung zu steuern. Insbesondere ist mittels der Absperreinrichtung 10E wahlweise das erste Reinigungsgerät 20 bzw. der fluidische Anschluss 40F oder das zweite Reinigungsgerät 30 bzw. der fluidische Anschluss 50F fluidisch mit dem Behälter 50G bzw. dem Filter 50H verbindbar.

Die Basisstation 10 weist vorzugsweise ein Steuergerät 10F auf, das das (elektrische) Laden, das Entleeren und/oder das Befüllen der Reinigungsgeräte 20, 30 steuert. Das Steuergerät 10F ist zu diesem Zweck vorzugsweise elektrisch mit dem (ersten) elektrischen Anschluss 40E, dem (zweiten) elektrischen Anschluss 50E, dem Netzteil 10A, der (ersten) Arbeitsmaschine 40J, der (zweiten) Arbeitsmaschine 50J und/oder der Absperreinrichtung 10E verbunden.

Wie bereits erläutert, ist das Reinigungssystem 1 bzw. die Basisstation 10 vorzugsweise modular aufgebaut und durch ein oder mehrere Module erweiterbar.

Durch die Modularität des Reinigungssystems 1 bzw. der Basisstation 10 kann ein vorhandenes Modul, beispielsweise das Bodenmodul 40, mit einem weiteren Modul, beispielsweise dem Kopfmodul 50, verbunden werden, um ein weiteres Reinigungsgerät 20, 30 an die Basisstation 10 anschließen zu können und/oder um der Basisstation 10 zusätzliche Funktion hinzuzufügen, wie das Aussaugen. Darüber hinaus können eine oder mehrere Funktionen durch das hinzugefügte Modul übernommen werden.

Bei dem dargestellten Beispiel können zwar beide Module 40, 50 zum Aussaugen und Laden der Reinigungsgeräte 20, 30 verwendet werden, es ist jedoch bevorzugt, dass eine oder mehrere Funktionen durch das Bodenmodul 40 oder das Kopfmodul 50 durchgeführt werden.

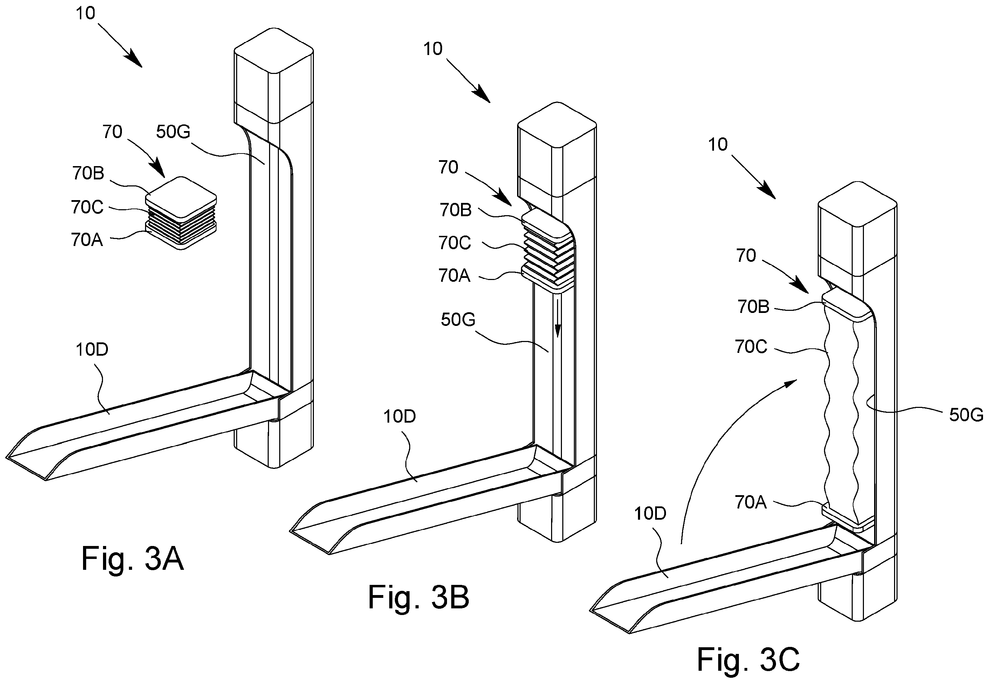

Im Folgenden wird eine weitere, besonders bevorzugte Ausführungsform des Reinigungssystems 1 bzw. der Basisstation 10 anhand der Fig. 2 und Fig. 3A bis 3C beschrieben.

Die zweite Ausführungsform entspricht zumindest im Wesentlichen der ersten Ausführungsform, sodass - auch wenn nicht explizit darauf hingewiesen wird - die im Zusammenhang mit der ersten Ausführungsform gemachten Erläuterungen entsprechend für die zweite Ausführungsform gelten und umgekehrt.

Insbesondere weist die im Folgenden beschriebene Ausführungsform ein oder mehrere Merkmale auf, die ausschließlich im Zusammenhang mit Fig. 1 beschrieben wurden. Darüber hinaus können auch ein oder mehrere Merkmale der zweiten Ausführungsform bei der ersten Ausführungsform vorgesehen sein. Insbesondere ist das vorschlagsgemäße Verfahren sowohl mit der Basisstation 10 gemäß der ersten Ausführungsform als auch mit der Basisstation 10 gemäß der zweiten Ausführungsform durchführbar.

Wie eingangs bereits ausgeführt, ist die Basisstation 10 dazu ausgebildet, die Reinigungsgeräte 20, 30 gleichzeitig/simultan und/oder gemäß einer - insbesondere vordefinierten und/oder elektronisch hinterlegten/gespeicherten - Priorisierung zu warten, insbesondere zu entleeren bzw. auszusaugen und/oder mit einem Reinigungsmittel zu befüllen, und/oder (elektrisch) zu laden, besonders bevorzugt automatisch bzw. selbsttätig.

In der in Fig. 2 dargestellten Ausführungsform weist die Basisstation 10 ein Gebläse als Arbeitsmaschine 40J bzw. 50J auf, um Sauggut aus den Reinigungsgeräten 20, 30 abzusaugen.

Im Folgenden wird das simultane bzw. priorisierte Entleeren bzw. Aussaugen der Reinigungsgeräte 20, 30 beschrieben. Die Reinigungsgeräte 20, 30 können jedoch grundsätzlich in entsprechender Weise auch simultan bzw. priorisiert elektrisch geladen und/oder beispielsweise mit einem Reinigungsmittel befüllt werden.

Wie bereits im Zusammenhang mit der ersten Ausführungsform erläutert, kann die Basisstation 10 einen oder mehrere Behälter 40G bzw. 50G, ein oder mehrere Filter 40H bzw. 50H und/oder einen oder mehrere Arbeitsmaschinen 40J bzw. 50J aufweisen.

Bei der dargestellten Ausführungsform ist bevorzugt, dass die Basisstation 10 einen Behälter 50G, ein im Behälter 50G angeordnetes Filter 50H, im Folgenden Filtereinrichtung 70 genannt, und eine Arbeitsmaschine 50J aufweist.

Der Behälter 50G ist vorzugsweise länglich und/oder zumindest im Wesentlichen zylindrisch ausgebildet. Vorzugsweise ist der Behälter 50G koaxial in dem Gehäuse 50A angeordnet. Insbesondere bildet die Hauptachse A der vorzugsweise länglichen Basisstation 10 (auch) eine Längsachse des Behälters 50G.

Vorzugsweise ist der Behälter 50G bzw. seine Längsachse im eingebauten Zustand der Basisstation 10 zumindest im Wesentlichen vertikal ausgerichtet.

Es ist bevorzugt, dass der Behälter 50G größer als der Sammelbehälter 20C des ersten Reinigungsgeräts 20 und/oder der Sammelbehälter 30C des zweiten Reinigungsgeräts 30 ist, insbesondere um mindestens das Doppelte oder Dreifache, sodass der gesamte Inhalt des Sammelbehälters 20C des ersten Reinigungsgeräts 20 und/oder des Sammelbehälters 30C des zweiten Reinigungsgeräts 30 vom Behälter 50G aufgenommen werden kann.

Besonders bevorzugt ist das Volumen des Behälters 50G größer als das zusammengenommene Volumen des Sammelbehälters 20C des ersten Reinigungsgeräts 20 und des Sammelbehälters 30C des zweiten Reinigungsgeräts 30, insbesondere um mindestens das Doppelte oder Dreifache. Auf diese Weise ist es möglich, den gesamten Inhalt beider Sammelbehälter 20C, 30C der Reinigungsgerät 20, 30 in den Behälter 50G aufzunehmen.

Der Behälter 50G weist vorzugsweise ein Volumen von mehr als 1 l oder 1,5 I, besonders bevorzugt von mehr als 2 l oder 3 l, auf.

Der Behälter 50G ist über eine erste bzw. untere Zuleitung 10J mit dem ersten fluidischen Anschluss 40F, über eine zweite bzw. obere Zuleitung 10K mit dem zweiten fluidischen Anschluss 50F und/oder über eine insbesondere seitliche Absaugleitung 10L mit der Arbeitsmaschine 50J und/oder einem Auslass im Gehäuse 50A fluidisch verbunden.

Bei der dargestellten Ausführungsform sind die Leitungen 10J, 10K und 10L derart angeordnet, dass Luft axial bzw. von oben und unten in den Behälter 50G einströmen und radial bzw. seitlich aus dem Behälter 50G ausströmen kann.

Vorzugsweise mündet die erste Zuleitung 10J axial von unten und die zweite Zuleitung 10K axial von oben in den Behälter 50G. Dies ermöglicht eine besonders einfache Luftführung sowie eine besonders kompakte Bauweise der Basisstation 10. Hier sind jedoch auch andere Anordnungen denkbar, insbesondere bei denen die erste Zuleitung 10J seitlich an dem Behälter 50G vorbeigeführt wird, um in die zweite Zuleitung 10K bzw. zusammen mit der zweiten Zuleitung 10K in den Behälter 50G zu münden, wie in Fig. 1 gezeigt.

Der Behälter 50G ist vorzugsweise zur Aufnahme der Filtereinrichtung 70 ausgebildet.

Bei der Filtereinrichtung 70 handelt es sich vorzugsweise um ein (Einweg-)Filter, insbesondere eine (Einweg-)Filterkartusche, das bzw. die vorzugsweise nach der Verwendung bzw. bei Erreichen einer bestimmten Füllmenge ausgewechselt bzw. durch ein neues Filter bzw. eine neue Filterkartusche ersetzt wird.

Vorzugsweise ist der Behälter 50G über die Klappe 10D zugänglich bzw. öffenbar, insbesondere um die Filtereinrichtung 70 einzusetzen bzw. herauszunehmen. Im Gegensatz zu der ersten Ausführungsform ist die Klappe 10D vorzugsweise auf der Vorderseite 50C der Basisstation 10 angeordnet, insbesondere derart, dass der Behälter 50G von vorne bzw. auf der Vorderseite 50C der Basisstation 10 geöffnet und die Filtereinrichtung 70 ausgewechselt werden kann.

Fig. 2 zeigt die Filtereinrichtung 70 im eingesetzten Zustand, in dem die Filtereinrichtung 70 fluidisch mit den Leitungen 10J, 10K und 10L verbunden ist.

Die Filtereinrichtung 70 weist - zumindest im eingesetzten Zustand - eine längliche bzw. zylinderartige und/oder eine dem Behälter 50G entsprechende Form auf.

Vorzugsweise ist die Filtereinrichtung 70 koaxial in dem Gehäuse 50A angeordnet. Insbesondere bildet die Hauptachse A der Basisstation 10 (auch) eine Längsachse der Filtereinrichtung 70.

Vorzugsweise ist die Filtereinrichtung 70 bzw. ihre Längsachse im eingesetzten Zustand zumindest im Wesentlichen vertikal ausgerichtet. Auf diese Weise wird der Bauraum der Basisstation 10 optimal genutzt.

Die Filtereinrichtung 70 weist vorzugsweise ein erstes bzw. unteres Anschlussteil 70A, ein zweites bzw. oberes Anschlussteil 70B, ein Filterelement bzw. -medium 70C und/oder einen Filterraum 70D auf, vorzugsweise wobei die Anschlussteile 70A, 70B den Filterraum 70D axial und das Filterelement 70C den Filterraum 70D radial begrenzen.

Die Anschlussteile 70A, 70B bilden vorzugsweise jeweils eine Stirnseite und/oder ein axiales Ende der vorzugsweise länglichen bzw. zylinderförmigen Filtereinrichtung 70.

Das Filterelement 70C ist vorzugsweise zwischen dem ersten Anschlussteil 70A und dem zweiten Anschlussteil 70B angeordnet.

Die Anschlussteile 70A, 70B sind vorzugsweise jeweils starr und/oder durch ein starres, vorzugsweise platten- bzw. scheibenartiges, Element gebildet.

Das Filterelement 70C ist vorzugsweise flexibel ausgebildet und/oder durch ein insbesondere flexibles und/oder mehrlagiges Filtermaterial bzw. -medium, wie ein Gewebe, Papier und/oder einen Vliesstoff, gebildet.

Bei der dargestellten Ausführungsform ist die Filtereinrichtung 70, insbesondere das Filterelement 70C, gefaltet und/oder als auseinanderziehbarer Faltenbalg ausgebildet. Auf diese Weise ist es möglich, die Transportgröße der Filtereinrichtung 70 zu verringern.

Die Filtereinrichtung 70 weist vorzugsweise eine erste bzw. untere Anschlussöffnung 70E und eine zweite bzw. obere Anschlussöffnung 70F auf, vorzugsweise wobei die Anschlussöffnungen 70E, 70F auf unterschiedlichen Stirnseiten der Filtereinrichtung 70 angeordnet sind.

Vorzugsweise ist die erste Anschlussöffnung 70E im ersten Anschlussteil 70A und die zweite Anschlussöffnung 70F im zweiten Anschlussteil 70B angeordnet.

Durch die Anordnung der Anschlussöffnungen 70E, 70F ist es möglich, die Filtereinrichtung 70 - insbesondere gleichzeitig - von unterschiedlichen Seiten bzw. von oben und unten zu befüllen. Auf diese Weise wird die Luftführung in der Basisstation 10 vereinfacht. Insbesondere wird keine separate Leitung benötigt, die seitlich neben dem Behälter 50G verläuft und Luft von unten nach oben oder umkehrt führt. Dies ermöglicht eine besonders kompakte Bauweise der Basisstation 10.

Es ist jedoch auch möglich, dass die Filtereinrichtung 70 lediglich eine Anschlussöffnung 70E bzw. 70F aufweist, wie bereits im Zusammenhang mit der ersten Ausführungsform erläutert.

Die Filtereinrichtung 70 ist vorzugsweise über die erste Anschlussöffnung 70E bzw. die erste Zuleitung 10J mit dem ersten fluidischen Anschluss 40F der Basisstation 10 und über die zweite Anschlussöffnung 70F bzw. die zweite Zuleitung 10K mit dem zweiten fluidischen Anschluss 50F der Basisstation 10 verbunden.

Insbesondere kann Luft über die erste Anschlussöffnung 70E bzw. die erste Zuleitung 10J bzw. von unten und über die zweite Anschlussöffnung 70F bzw. die zweite Zuleitung 10K bzw. von oben in den Filterraum 70D gesaugt werden.

Optional weist die Filtereinrichtung 70 eine erste bzw. untere Verschluss- bzw. Rückschlagklappe 70G und eine zweite bzw. obere Verschluss- bzw. Rückschlagklappe 70H für die Rückhaltung von Sauggut auf, wobei die erste Rückschlagkappe 70G der ersten Anschlussöffnung 70E und die zweite Rückschlagkappe 70H der zweiten Anschlussöffnung 70F zugeordnet ist.

Die Anschlussöffnungen 70E, 70F sind durch die Rückschlagklappen 70G, 70H verschließbar oder freigebbar. Insbesondere werden die Anschlussöffnungen 70E, 70F (ausschließlich) mechanisch bzw. durch die Luftströmung betätigt, insbesondere geschlossen oder geöffnet.

Vorzugsweise sind die Rückschlagklappen 70G, 70H jeweils durch mindestens ein flexibles/biegbares Element, wie einen Gummilappen, gebildet, das sich in Strömungsrichtung biegt bzw. die jeweilige Anschlussöffnung 70E bzw. 70F nur dann freigibt, wenn über die entsprechende Anschlussöffnung 70E bzw. 70F Luft angesaugt wird.

Der Filterraum 70D ist vorzugsweise in mehrere, hier zwei, Filterkammern 70K, 70L unterteilt.

Vorzugsweise weist die Filtereinrichtung 70 eine Trennwand 70J auf, die im Filterraum 70D angeordnet ist und/oder den Filterraum 70D in eine erste bzw. untere Filterkammer 70K und eine zweite bzw. obere Filterkammer 70L unterteilt.

Die erste Anschlussöffnung 70E ist vorzugsweise der ersten Filterkammer 70K und die zweite Anschlussöffnung 70F der zweiten Filterkammer 70L zugeordnet. Die erste Anschlussöffnung 70E bildet also einen Einlass für die erste Filterkammer 70K und die zweite Anschlussöffnung 70F einen Einlass für die zweite Filterkammer 70L.

Die Filterkammern 70K, 70L sind vorzugsweise gleich groß, können jedoch auch unterschiedlich groß ausgebildet sein, vorzugsweise wobei die erste Filterkammer 70K kleiner als die zweite Filterkammer 70L ist, wie in Fig. 2 angedeutet.

Vorzugsweise ist die Trennwand 70J luftdicht bzw. undurchlässig. Es ist jedoch auch möglich, dass die Trennwand 70J durchlässig bzw. durch ein permeables Material, insbesondere ein Filtermaterial, gebildet ist.

Vorzugsweise ist die Trennwand 70J auf Höhe des Auslasses des Behälters 50G angeordnet, um ein gleichmäßiges Absaugen der Filterkammern 70K, 70L zu ermöglichen.

Durch die Unterteilung des Filterraums 70D in die zwei Filterkammern 70K, 70L wird verhindert, dass sich das gesamte Sauggut in der Filtereinrichtung 70 unten bzw. an der ersten Anschlussöffnung 70E sammelt und somit die Luftzufuhr beeinträchtigt bzw. ein Öffnen der ersten Rückschlagklappe 70G blockiert.

Die Filtereinrichtung 70, insbesondere das erste Anschlussteil 70A und/oder das zweite Anschlussteil 70B, sind bzw. ist vorzugsweise form- oder kraftschlüssig im Behälter 50G befestigt/gehalten.

Die Basisstation 10, insbesondere der Behälter 50G, weist eine Halterung 50K auf, um die Filtereinrichtung 70 - insbesondere oben und unten - im Behälter 50G zu halten.

Die Basisstation 10, insbesondere der Behälter 50G, weist vorzugsweise einen ersten bzw. unteren Halteteil 50L für das erste Anschlussteil 70A und einen zweiten bzw. oberen Halteteil 50M für das zweite Anschlussteil 70B auf, vorzugsweise wobei die Halteteile 50L, 50M die Halterung 50K bilden.

Das erste Halteteil 50L ist vorzugsweise dazu ausgebildet, das erste Anschlussteil 70A form- und/oder kraftschlüssig zu halten bzw. unten zu fixieren. Bei der dargestellten Ausführungsform ist das erste Halteteil 50L durch ein oder mehrere Schnapphaken gebildet, die das erste Anschlussteil 70A umgreifen.

Das zweite Halteteil 50M ist vorzugsweise dazu ausgebildet, das zweite Anschlussteil 70B form- und/oder kraftschlüssig bzw. oben zu halten. Bei der dargestellten Ausführungsform ist das zweite Halteteil 50M durch eine Nut bzw. einen Steckplatz gebildet, in die bzw. den das zweite Anschlussteil 70B eingeschoben/gehängt ist.

Wie bereits erläutert, ist die Filtereinrichtung 70 auswechselbar bzw. aus dem Behälter 50G entnehmbar. Im Folgenden wird anhand der Fig. 3A bis 3C das Einsetzen der Filtereinrichtung 70 in die Basisstation 10 näher erläutert.

Die Filtereinrichtung 70, insbesondere der Filterraum 70D bzw. die Filterkammern 70K, 70L, ist bzw. sind im Auslieferungszustand der Filtereinrichtung 70 - vorzugsweise durch Falten des Filterelements 70C - verkleinert bzw. komprimiert, vorzugsweise auf weniger als 90 % oder 80 %, besonders bevorzugt auf weniger als 60 % oder 40 %, des Volumens der Filtereinrichtung 70, insbesondere des Filterraums 70D bzw. der Filterkammern 70k, 70L, im eingesetzten bzw. (vollständig) expandierten Zustand der Filtereinrichtung 70.

Fig. 3A zeigt die Basisstation 10 mit aufgeschwenkter Klappe 10D bzw. geöffnetem Behälter 50G und die Filtereinrichtung 70 im Auslieferungszustand bzw. im komprimierten Zustand.

Vorzugsweise wird die Filtereinrichtung 70 erst in der Basisstation 10 bzw. im Behälter 50G expandiert bzw. auseinandergezogen. Es ist jedoch grundsätzlich auch möglich, die Filtereinrichtung 70 außerhalb der Basisstation 10 bzw. des Behälters 50G zu expandieren und im expandierten Zustand in die Basisstation 10 bzw. den Behälter 50G einzusetzen.

Wie in Fig. 3B dargestellt, wird die Filtereinrichtung 70 vorzugsweise zunächst oben bzw. an dem zweiten Halteteil 50M befestigt, insbesondere in das zweite Halteteil 50M geschoben, und (anschließend) auseinandergezogen bzw. entfaltet.

Insbesondere wird zunächst das zweite Anschlussteil 70B in die Halterung 50K bzw. das zweite Halteteil 50M eingesetzt bzw. geschoben und anschließend das erste Anschlussteil 70A nach unten bzw. in Richtung des ersten Halteteils 50L gezogen.

Es ist jedoch grundsätzlich auch möglich, die Filtereinrichtung 70, insbesondere das erste Anschlussteil 70A, zunächst unten bzw. am ersten Halteteil 50L zu befestigen und anschließend das zweite Anschlussteil 70B nach oben bzw. in Richtung des zweiten Halteteils 50M zu ziehen.

Fig. 3B zeigt die Filtereinrichtung 70 im eingesetzten, aber noch nicht vollständig expandierten Zustand. Fig. 3C zeigt die Filtereinrichtung 70 im vollständig expandierten Zustand, in dem das erste Anschlussteil 70A an dem ersten Halteteil 50L und das zweite Anschlussteil 70B an dem zweiten Halteteil 50M befestigt ist.

Die Klappe 10D wird in einem letzten Schritt geschlossen, vorzugsweise luftdicht bzw. derart, dass ausschließlich über die Zuleitungen 10J, 10K Luft in den Behälter 50G strömt, wenn die Arbeitsmaschine 50J in Betrieb ist.

Wie bereits erläutert, werden die Reinigungsgeräte 20, 30 gleichzeitig oder gemäß einer Priorisierung bzw. nacheinander, besonders bevorzugt wahlweise gleichzeitig oder gemäß einer Priorisierung, von der Basisstation 10 (automatisch) entleert/ausgesaugt.

Es ist also bevorzugt, dass in der Anschlussposition der Reinigungsgeräte 20, 30 die Luftführung in der Basisstation 10 geändert werden kann, insbesondere um wahlweise ausschließlich ein Reinigungsgerät 20 bzw. 30 oder beide Reinigungsgeräte 20, 30 (gleichzeitig) aussaugen zu können.

Im Folgenden wird wieder auf die Fig. 2 Bezug genommen, um die Betriebsweise der Basisstation 10, insbesondere das Entleeren der Reinigungsgeräte 20 bzw. 30 mittels der Basisstation 10, näher zu beschreiben.

Um die Luftführung in der Basisstation 10 zu ändern, weist die Basisstation 10 die Absperreinrichtung 10E auf, vorzugsweise wobei die Absperreinrichtung 10E als Absperrklappe ausgebildet und in einer der Zuleitungen 10J bzw. 10K angeordnet ist.

Bei der in Fig. 2 dargestellten Ausführungsform weist die Basisstation 10 zwei - insbesondere gesteuerte bzw. mit dem Steuergerät 10F verbundene - Absperreinrichtungen 10E und 10M auf, vorzugsweise wobei die erste Absperreinrichtung 10E der ersten Zuleitung 10J und die zweite Absperreinrichtung 10M der zweiten Zuleitung 10K zugeordnet ist.

Mittels der ersten Absperreinrichtung 10E ist es möglich, die Strömung in der ersten Zuleitung 10J zu steuern bzw. die erste Zuleitung 10J wahlweise zu öffnen oder zu schließen bzw. eine fluidische Verbindung zwischen dem Filterraum 70D, insbesondere der ersten Filterkammer 70K, und dem ersten Reinigungsgerät 20, insbesondere dessen Sammelbehälter 20C, wahlweise herzustellen oder zu unterbrechen.

Mittels der zweiten Absperreinrichtung 10M ist es möglich, die Strömung in der zweiten Zuleitung 10K zu steuern bzw. die zweite Zuleitung 10K wahlweise zu öffnen oder zu schließen bzw. eine fluidische Verbindung zwischen dem Filterraum 70D, insbesondere der zweiten Filterkammer 70L, und dem zweiten Reinigungsgerät 30, insbesondere dessen Sammelbehälter 30C, wahlweise herzustellen oder zu unterbrechen.

Es sind jedoch auch Lösungen möglich, bei denen lediglich eine Absperreinrichtung 10E bzw. 10M eingesetzt wird, um die Reinigungsgeräte 20 bzw. 30 gleichzeitig und/oder nacheinander zu entleeren bzw. abzusaugen. Beispielsweise kann die (erste) Absperreinrichtung 10E als 3/2- oder 3/3-Wegeventil ausgebildet sein, das mit beiden Zuleitungen 10J, 10K und dem Einlass in den Behälter 50G verbunden ist.

Das Steuergerät 10F ist dazu ausgebildet, die Absperreinrichtungen 10E, 10M - insbesondere unabhängig voneinander - anzusteuern, also wahlweise zu schließen oder zu öffnen. Die Absperreinrichtungen 10E, 10M weisen vorzugsweise jeweils einen entsprechenden Aktor (nicht dargestellt) auf, der von dem Steuergerät 10F angesteuert wird.

Die Absperreinrichtungen 10E, 10M bzw. die Zuleitungen 10J, 10K sind vorzugsweise üblicherweise geschlossen und/oder werden vorzugsweise nur dann (automatisch) betätigt bzw. geöffnet, wenn das zugeordnete Reinigungsgerät 20 bzw. 30 an die Basisstation 10 angeschlossen ist bzw. die Anschlussposition eingenommen hat. Auf diese Weise wird verhindert, dass Sauggut aus der Basisstation 10 bzw. dem Behälter 50G entweichen kann.

Vorzugsweise werden die Absperreinrichtungen 10E, 10M unabhängig voneinander gesteuert bzw. betätigt. Auf diese Weise ist es möglich, lediglich eine oder (gleichzeitig) beide Absperreinrichtungen 10E, 10M zu öffnen bzw. zu schließen bzw. lediglich ein oder (gleichzeitig) beide Reinigungsgeräte 20, 30 zu entleeren/auszusaugen.

Insbesondere ist es möglich, zunächst eine Absperreinrichtung 10E bzw. 10M, beispielsweise die erste Absperreinrichtung 10E, und anschließend - insbesondere zusätzlich oder alternativ - eine andere Absperreinrichtung 10E bzw. 10M, beispielsweise die zweite Absperreinrichtung 10M, zu betätigen bzw. zu öffnen, insbesondere um zunächst ein Reinigungsgerät 20 bzw. 30, beispielsweise das erste Reinigungsgerät 20, und anschließend - insbesondere zusätzlich oder alternativ - ein anderes Reinigungsgerät 20 bzw. 30, beispielsweise das zweite Reinigungsgerät 30, zu entleeren/auszusaugen.

Der Aussaugvorgang, also das Entleeren/Aussaugen der Reinigungsgeräte 20 bzw. 30, wird vorzugsweise durch Öffnen der jeweiligen Absperreinrichtung 10E bzw. 10M gestartet.

Die Arbeitsmaschine 50J wird vorzugsweise (unmittelbar) vor, zusammen mit oder (unmittelbar) nach dem Öffnen der jeweiligen Absperreinrichtung 10E bzw. 10M aktiviert bzw. eingeschaltet, insbesondere mittels des Steuergeräts 10F.

Der Aussaugvorgang der Reinigungsgeräte 20 bzw. 30 wird vorzugsweise durch Schließen der jeweiligen Absperreinrichtung 10E bzw. 10M beendet.

Die Arbeitsmaschine 50J wird vorzugsweise (unmittelbar) vor, zusammen mit oder (unmittelbar) nach dem Schließen der jeweiligen Absperreinrichtung 10E bzw. 10M deaktiviert bzw. ausgeschaltet.

Der Aussaugvorgang, insbesondere das Öffnen der jeweiligen Absperreinrichtung 10E bzw. 10M und/oder das Aktivieren der Arbeitsmaschine 50J, kann unmittelbar oder zeitversetzt, beispielsweise 10 Sekunden, nach dem Anschließen der Reinigungsgeräte 20, 30 (automatisch) gestartet werden.

Der Aussaugvorgang, insbesondere das Öffnen der jeweiligen Absperreinrichtung 10E bzw. 10M und/oder Aktivieren der Arbeitsmaschine 50J, kann aber auch in Abhängigkeit vom Füllstand des jeweiligen Sammelbehälters 20C bzw. 30C, insbesondere erst bei Überschreiten eines vordefinierten Füllstandes des jeweiligen Sammelbehälters 20C bzw. 30C, (automatisch) durchgeführt bzw. gestartet werden.

Vorzugsweise sind die die Reinigungsgeräte 20, 30 mit einer entsprechenden Sensorik (nicht dargestellt) ausgestattet, um den Füllstand der Sammelbehälter 20C bzw. 30C zu ermitteln.

Es kann also vorgesehen sein, dass ein Reinigungsgerät 20 bzw. 30 zwar an die Basisstation 10 angeschlossen ist, beispielsweise um das Reinigungsgerät 20 bzw. 30 (elektrisch) zu laden, aber nicht ausgesaugt wird, weil der Füllstand des jeweiligen Sammelbehälters 20C bzw. 30C noch nicht einen vordefinierten Wert erreicht bzw. überschritten hat und beispielsweise noch ein (weiterer) Reinigungsvorgang mit dem Reinigungsgerät 20 bzw. 30 möglich ist.

Vorzugsweise wird der Aussaugvorgang für einen bestimmten bzw. vordefinierten Zeitraum, beispielsweise 10 oder 20 Sekunden, durchgeführt oder in Abhängigkeit vom Füllstand des jeweiligen Sammelbehälters 20C bzw. 30C, insbesondere nach Unterschreiten eines vordefinierten Füllstandes des jeweiligen Sammelbehälters 20C bzw. 30C, beendet.

Insbesondere werden die jeweiligen Absperreinrichtungen 10E bzw. 10M und/oder die Arbeitsmaschine 50J nach einem bestimmten bzw. vordefinierten Zeitraum, beispielsweise 10 oder 20 Sekunden, oder in Abhängigkeit vom Füllstand des jeweiligen Sammelbehälters 20C bzw. 30C, insbesondere nach Unterschreiten eines vordefinierten Füllstandes des jeweiligen Sammelbehälters 20C bzw. 30C, (automatisch) geschlossen bzw. deaktiviert.

Beispielsweise wird die erste Zuleitung 10J bzw. die erste Absperreinrichtung 10E geöffnet bzw. der Aussaugvorgang gestartet, sobald das erste Reinigungsgerät 20 an die Basisstation 10 angeschlossen wird bzw. sich in der Anschlussposition befindet.

Sobald das erste Reinigungsgerät 20, insbesondere der Sammelbehälter 20C, vollständig entleert ist, wird die erste Zuleitung 10J bzw. die erste Absperreinrichtung 10E (automatisch) geschlossen.

Für den Fall, dass während des Aussaugvorganges eines Reinigungsgeräts 20 bzw. 30 ein weiteres Reinigungsgerät 20 bzw. 30, beispielsweise das zweite Reinigungsgerät 30, an die Basisstation 10 angeschlossen wird, wird vorzugsweise zusätzlich die zweite Zuleitung 10K bzw. die zweite Absperreinrichtung 10M geöffnet, insbesondere um gleichzeitig beide Reinigungsgeräte 20, 30 auszusaugen.

Bei einer besonders bevorzugten Verfahrensvariante wird die Leistung, insbesondere die Drehzahl, der Arbeitsmaschine 50J - zumindest temporär - erhöht, wenn beide Reinigungsgeräte 20 bzw. 30 an die Basisstation 10 angeschlossen sind bzw. gleichzeitig ausgesaugt werden und/oder beiden Absperreinrichtungen 10E, 10M geöffnet sind. Auf diese Weise können die Reinigungsgeräte 20, 30 (stets) gleichmäßig bzw. mit gleicher Leistung je Reinigungsgerät 20, 30 ausgesaugt werden, unabhängig davon ob lediglich ein Aussaugvorgang stattfindet oder mehrere Aussaugvorgänge zeitgleich erfolgen.

Besonders bevorzugt wird die Leistung, insbesondere die Drehzahl, der Arbeitsmaschine 50J (wieder) reduziert, wenn ein Reinigungsgerät 20 bzw. 30 vor einem anderen Reinigungsgerät 20 bzw. 30 entleert wurde und/oder eine Absperreinrichtung 10E bzw. 10M geschlossen wird und eine andere Absperreinrichtung 10E bzw. 10M geöffnet bleibt.

Es ist aber auch möglich, dass der Aussaugvorgang eines Reinigungsgeräts 20 bzw. 30, beispielsweise des ersten Reinigungsgeräts 20, (temporär) angehalten bzw. unterbrochen wird, wenn ein anderes Reinigungsgerät 20 bzw. 30, beispielsweise das zweite Reinigungsgerät 30, an die Basisstation 10 angeschlossen wird.

Besonders bevorzugt wird die erste Zuleitung 10J bzw. die erste Absperreinrichtung 10E geschlossen bzw. der Aussaugvorgang des ersten Reinigungsgeräts 20 unterbrochen und (stattdessen) die zweite Zuleitung 10K bzw. die zweite Absperreinrichtung 10M geöffnet bzw. der Aussaugvorgang des zweiten Reinigungsgeräts 30 gestartet, wenn das zweite Reinigungsgerät 30 an die Basisstation 20 angeschlossen wird, insbesondere um ausschließlich bzw. vorrangig das zweite Reinigungsgerät 30 auszusaugen.

Erst wenn der Aussaugvorgang des zweiten Reinigungsgerät 30 abgeschlossen ist bzw. das zweite Reinigungsgerät 30 vollständig entleert ist, wird der Aussaugvorgang des ersten Reinigungsgeräts 20 gestartet/fortgesetzt bzw. die erste Absperreinrichtung 10E (wieder) geöffnet.

Es ist folglich gemäß einer besonders bevorzugten Verfahrensvariante vorgesehen, dass das zweite Reinigungsgerät 30 Vorrang vor dem ersten Reinigungsgerät 20 hat, also vorrangig/priorisiert vor dem ersten Reinigungsgerät 20 mittels der Basisstation 10 entleert und/oder befüllt wird. Besonders bevorzugt werden die Reinigungsgeräte 20, 30 nämlich gemäß einer Priorisierung von der Basisstation 10 entleert/ausgesaugt.

Ganz besonders bevorzugt wird das Entleeren/Aussaugen und/oder Befüllen des ersten Reinigungsgeräts 20 nur dann bzw. erst (wieder) gestartet, wenn das zweite Reinigungsgerät 30 von der Basisstation 10 abgenommen und/oder von einem Nutzer benutzt wird.

Vorzugsweise weist die Basisstation 10 ein oder mehrere Sensoren 10N, 10P auf, um zu detektieren, ob das erste Reinigungsgerät 20 bzw. das zweite Reinigungsgerät 30 an die Basisstation 10 angeschlossen ist.

Bei der dargestellten Ausführungsform weist die Basisstation 10 einen ersten bzw. unteren Sensor 10N und einen zweiten bzw. oberen Sensor 10P auf, wobei der erste Sensor 10N dem Bodenmodul 40 bzw. dem ersten Reinigungsgerät 20 und der zweite Sensor 10P dem Kopfmodul 50 bzw. dem zweiten Reinigungsgerät 30 zugeordnet ist.

Mittels des ersten Sensors 10N ist es möglich, zu detektieren, ob sich das erste Reinigungsgerät 20 in der Anschlussposition, insbesondere unterhalb der Basisstation 10, befindet und/oder fluidisch mit der Basisstation 10 gekoppelt werden kann.

Mittels des zweiten Sensors 10P ist es möglich, zu detektieren, ob sich das zweite Reinigungsgerät 30 in der Anschlussposition befindet, insbesondere in die Basisstation 10 gehängt ist, und/oder fluidisch mit der Basisstation 10 gekoppelt werden kann.

Bei den Sensoren 10N, 10P kann es sich beispielsweise um resistive, induktive, magnetische, kapazitive, piezoelektrische und/oder optoelektronische Sensoren handeln.

Zusätzlich oder alternativ können die elektrischen Anschlüsse 40E bzw. 50E zur Detektion der Reinigungsgeräte 20, 30 bzw. für die Sensoren 10N, 10P verwendet werden.

Wie in Fig. 2 angedeutet, kann das Reinigungssystem 1 bzw. die Basisstation 10 mit weiteren Einrichtungen (datentechnisch) gekoppelt werden.

Vorzugsweise ist das Reinigungssystem 1 bzw. die Basisstation 10 zum Datenaustausch bzw. zur Signalübertragung mit weiteren Einrichtungen ausgebildet.

Vorzugsweise ist das Reinigungssystem 1 mit einem Mobilgerät 4, wie einem Tablet, Smartphone o.dgl., und/oder einer Zentraleinrichtung 5 ausgestattet und/oder (datentechnisch) verbindbar.

Eine Zentraleinrichtung im Sinne der vorliegenden Erfindung ist vorzugsweise ein Rechner bzw. Computer, ein Server oder ein Serververbund. Eine Zentraleinrichtung kann aber auch eine virtuelle Einheit von mehreren Rechnern bzw. Computern und/oder Servern sein und/oder durch sogenanntes Cloud-Computing realisiert sein.

Vorzugsweise sind/ist das Mobilgerät 4 und/oder die Zentraleinrichtung 5 räumlich getrennt und/oder beabstandet zu der Basisstation 10 angeordnet.

Vorzugsweise ist eine drahtgebundene oder drahtlose Datenverbindung zwischen der Basisstation 10, dem ersten Reinigungsgeräts 20, dem zweiten Reinigungsgerät 30, dem Mobilgerät 4 und/oder der Zentraleinrichtung 5 herstellbar, insbesondere um ein Signal und/oder eine Information zu übermitteln bzw. zwischen der Basisstation 10, dem ersten Reinigungsgeräts 20, dem zweiten Reinigungsgerät 30, dem Mobilgerät 4 und/oder der Zentraleinrichtung 5 auszutauschen.

Der Datenaustausch bzw. die Signalübertragung zwischen den Reinigungsgeräten 20, 30 und der Basisstation 10 kann dabei direkt oder indirekt, insbesondere über das Mobilgerät 4 bzw. die Zentraleinrichtung 5, erfolgen.

Ein Signal im Sinne der vorliegenden Erfindung ist vorzugsweise ein Mittel zur Informationsübertragung, eine (modulierte) Welle insbesondere in einem Leiter, eine Bitsequenz, ein Paket im informationstechnischen Sinne o. dgl.

Vorzugsweise ist ein Signal im Sinne der vorliegenden Erfindung über eine - drahtlose oder drahtgebundene - Datenverbindung übertragbar. Besonders bevorzugt sind einem Signal ein oder mehrere Informationen zugeordnet und/oder in dem Signal enthalten, die mittels des Signals übermittelbar sind.

Um zwischen der Basisstation 10, dem ersten Reinigungsgerät 20, dem zweiten Reinigungsgerät 30, dem Mobilgerät 4 und/oder der Zentraleinrichtung 5 einen Datenaustausch zu ermöglichen bzw. ein Signal zu übertragen, weist vorzugsweise die Basisstation 10 eine Kommunikationseinrichtung 10Q, das erste Reinigungsgerät 20 ein erstes Kommunikationsgerät 20Q und/oder das zweite Reinigungsgerät 30 ein zweites Kommunikationsgerät 30Q auf.

Die Kommunikationseinrichtung 10Q bzw. die Kommunikationsgeräte 20Q, 30Q weist bzw. weisen vorzugsweise (jeweils) einen Receiver zum Empfangen und/oder Transmitter zum Senden eines Signals auf. Besonders bevorzugt weist bzw. weisen die Kommunikationseinrichtung 10Q bzw. die Kommunikationsgeräte 20Q, 30Q eine Funkschnittstelle, insbesondere eine WPAN-Schnittstelle, eine Nahfeldkommunikationsschnittstelle, insbesondere eine NFC-Schnittstelle, eine WLAN-Schnittstelle oder eine sonstige, besonders bevorzugt drahtlose Schnittstelle auf.

Zusätzlich oder alternativ werden die elektrischen Anschlüsse 20B, 30B für den vorzugsweise drahtgebundenen Datenaustausch zwischen der Basisstation 10, dem ersten Reinigungsgeräts 20 und/oder dem zweiten Reinigungsgerät 30 verwendet, insbesondere wenn sich die Reinigungsgeräte 20, 30 in der Anschlussposition befinden.

Wie bereits erläutert, wird der Aussaugvorgang bzw. das Entleeren der Reinigungsgeräte 20, 30 vorzugsweise automatisch bzw. selbsttätig gestartet/durchgeführt, insbesondere sobald sich die Reinigungsgeräte 20, 30 in der Anschlussposition befinden bzw. von den Sensoren 10N, 10P detektiert werden.

Mittels des Datenaustausches ist es jedoch auch möglich, dass die Basisstation 10, insbesondere der Aussaugvorgang bzw. das Entleeren der Reinigungsgeräte 20, 30, mittels des Mobilgeräts 4, der Zentraleinrichtung 5 und/oder eines Reinigungsgeräts 20 bzw. 30 gesteuert, insbesondere gestartet und/oder beendet, wird.

Beispielsweise kann ein (vorhandenes) Bedienelement eines Reinigungsgeräts 20 bzw. 30, wie der Ein/Aus-Schalter, verwendet werden, um den Aussaugvorgang des Reinigungsgeräts 20 bzw. 30 zu starten. Somit muss kein separates Bedienelement für den Start des Aussaugvorgangs an dem Reinigungsgerät 20 bzw. 30 vorgesehen werden.

Vorzugsweise übermittelt das erste Reinigungsgerät 20, insbesondere das Kommunikationsgerät 20Q, und/oder das zweite Reinigungsgerät 30, insbesondere das Kommunikationsgerät 30Q, eine Information bzw. ein Zustandssignal mit einer Information insbesondere über den getätigten Reinigungsvorgang, den Füllstand des jeweiligen Sammelbehälters 20C bzw. 30C und/oder den Ladezustand des jeweiligen Akkumulators 20A bzw. 30A an die Basisstation 10, insbesondere die Kommunikationseinrichtung 10Q, das Mobilgerät 4 und/oder die Zentraleinrichtung 5, insbesondere um den Aussaugvorgang und/oder Ladevorgang mittels der Basisstation 10 zu steuern, zu starten oder zu beenden.

Die Datenübertragung erfolgt vorzugweise, wenn die Reinigungsgeräte 20, 30 an die Basisstation 10 angeschlossen und/oder in Benutzung sind. Es ist aber auch möglich, dass kontinuierlich oder in Intervallen eine Datenübertragung zwischen der Basisstation 10 und den Reinigungsgeräten 20, 30 stattfindet.

Die Basisstation 10 weist vorzugsweise eine Datenverarbeitungseinrichtung 10R auf, vorzugsweise wobei die Datenverarbeitungseinrichtung 10R durch einen Computer gebildet ist und/oder mindestens einen (zentralen) Prozessor und/oder einen Arbeitsspeicher aufweist.

Die Datenverarbeitungseinrichtung 10R ist vorzugsweise elektrisch mit der Kommunikationseinrichtung 10Q und dem Steuergerät 10F verbunden und/oder räumlich von der Kommunikationseinrichtung 10Q und dem Steuergerät 10F beabstandet. Die Datenverarbeitungseinrichtung 10R kann aber auch in die Kommunikationseinrichtung 10Q oder das Steuergerät 10F integriert sein.

Vorzugsweise ist die Datenverarbeitungseinrichtung 10R dazu ausgebildet, die mittels der Kommunikationseinrichtung 10Q empfangenen Signale bzw. Informationen auszuwerten und/oder als Eingabewerte an das Steuergerät 10F zu übermitteln.

Insbesondere wird das von den Reinigungsgeräten 20, 30 übermittelte Zustandssignal ausgewertet, um - beispielsweise abhängig vom Füllstand - das erste Reinigungsgerät 20 und/oder das zweite Reinigungsgerät 30 abzusaugen, also die erste Absperreinrichtung 10E und/oder die zweite Absperreinrichtung 10M zu öffnen und/oder die Arbeitsmaschine 50J zu aktivieren.

Es ist aber auch möglich, dass das Mobilgerät 4 und/oder die Zentraleinrichtung 5 in Abhängigkeit vom empfangenen Zustandssignal die Basisstation 10, insbesondere die Absperreinrichtungen 10E, 10M und/oder die Arbeitsmaschine 50J, ansteuern/ansteuert.

Vorzugsweise weist die Basisstation 10, insbesondere die Datenverarbeitungseinrichtung 10R, einen Speicher, wie eine Festplatte, einen EPROM o.dgl., auf, in dem ein oder mehrere Informationen insbesondere zu der Priorisierung der Reinigungsgeräte 20, 30 hinterlegt oder hinterlegbar sind.

Es ist jedoch auch möglich, dass das Mobilgerät 4 und/oder die Zentraleinrichtung 5 eine oder mehrere Informationen zu der Priorisierung der Reinigungsgeräte 20 bzw. 30 enthält bzw. speichert.

Vorzugsweise greifen/greift die Datenverarbeitungseinrichtung 10R, das Mobilgerät 4 und/oder die Zentraleinrichtung 5 auf den Speicher zu, um anhand der dort gespeicherten Informationen den Aussaugvorgang zu steuern. Besonders bevorzugt können/kann die Datenverarbeitungseinrichtung 10R, das Mobilgerät 4 und/oder die Zentraleinrichtung 5 die auf dem Speicher hinterlegten Daten modifizieren, insbesondere die Priorisierung ändern.

Vorzugsweise wird die Basisstation 10 mittels des Mobilgeräts 4 bedient und/oder konfiguriert. Insbesondere ist es möglich, mittels des Mobilgeräts 4 die Priorisierung der Reinigungsgeräte 20, 30 zu ändern und/oder einen Aussaugvorgang zu konfigurieren, insbesondere den (automatischen) Beginn, die Länge und/oder das (automatische) Ende eines Aussaugvorgangs zu ändern, und/oder einen Aussaugvorgang zu starten bzw. zu beenden.

Alternativ oder zusätzlich kann die Basisstation 10 eine Eingabeeinrichtung, wie einen berührungsempfindlichen Bildschirm (nicht dargestellt), aufweisen, die bzw. der es einem Nutzer ermöglicht, die Basisstation 10 zu konfigurieren, insbesondere die Priorisierung, den (automatischen) Beginn, die Länge und/oder das (automatische) Ende eines Aussaugvorgangs zu ändern, und/oder einen Aussaugvorgang zu starten bzw. zu beenden.

Unter dem Begriff "Priorisierung" im Sinne der vorliegenden Erfindung ist vorzugsweise eine festgelegte und/oder (elektronisch) gespeicherte Priorität/Rangfolge der Reinigungsgeräte 20 bzw. 30 beim Warten mittels der Basisstation 10 zu verstehen.

Vorzugsweise ist oder enthält die Priorisierung eine den Reinigungsgeräten 20 bzw. 30 zugeordnete, vorzugsweise in dem Mobilgerät 4, der Zentraleinrichtung 5 und/oder der Basisstation 10 (elektronisch) gespeicherte Information, die die Abfolge/Reihenfolge der Wartung festlegt und/oder mittels derer bestimmt wird, welches Reinigungsgerät 20 bzw. 30 vorrangig bzw. nachrangig entleert und/oder befüllt wird.

Insbesondere werden mittels der Priorisierung die Absperreinrichtungen 10E, 10M derart gesteuert, dass das priorisierte bzw. vorrangige Reinigungsgerät 20 bzw. 30 vor dem nachrangigen Reinigungsgerät 20 bzw. 30 fluidisch mit der Basisstation 10, insbesondere der Filtereinrichtung 70, verbunden und/oder von der Basisstation 10 ausgesaugt wird.

Einzelne Aspekte, Merkmale und Verfahrensschritte der vorliegenden Erfindung können unabhängig, aber auch in beliebiger Kombination und/oder Reihenfolge realisiert werden.

Weitere, auch unabhängig oder in beliebiger Kombination realisierbare Aspekte sind im Folgenden aufgelistet:
1. Verfahren zum Betreiben eines Reinigungssystems (1) mit mehreren mobilen Reinigungsgeräten (20, 30) und einer Basisstation (10) für die Reinigungsgeräte (20, 30), vorzugsweise wobei die Basisstation (10) nach einem der Aspekte 8 bis 11 ausgebildet ist,
   wobei die Reinigungsgeräte (20, 30) gleichzeitig oder gemäß einer Priorisierung von der Basisstation (10) entleert und/oder mit einem Reinigungsmittel befüllt werden.
2. Verfahren nach Aspekt 1, wobei die Reinigungsgeräte (20, 30) wahlweise gleichzeitig oder nacheinander entleert bzw. befüllt werden.
3. Verfahren nach Aspekt 1 oder 2, wobei ein erstes Reinigungsgerät (20) nachrangig und/oder ein zweites Reinigungsgerät (30) vorrangig mittels der Basisstation (10) entleert und/oder befüllt wird.
4. Verfahren nach einem der voranstehenden Aspekte, wobei ein Entleeren und/oder Befüllen eines ersten Reinigungsgeräts (20) unterbrochen wird, wenn ein zweites Reinigungsgerät (30) an die Basisstation (10) angeschlossen wird.
5. Verfahren nach einem der voranstehenden Aspekte, wobei ein Entleeren und/oder Befüllen eines ersten Reinigungsgeräts (20) gestartet oder fortgesetzt wird, wenn ein zweites Reinigungsgerät (30) vollständig entleert bzw. befüllt wurde und/oder in Benutzung ist.
6. Verfahren nach einem der voranstehenden Aspekte, wobei ein Entleeren und/oder Befüllen der Reinigungsgeräte (20, 30) in Abhängigkeit vom Füllstand der Reinigungsgeräte (20, 30) gestartet oder beendet wird.
7. Verfahren nach einem der voranstehenden Aspekte, wobei ein Entleeren und/oder Befüllen eines ersten Reinigungsgeräts (20) mittels eines zweiten Reinigungsgeräts (30) und/oder eines Mobilgeräts (4) gesteuert wird.
8. Basisstation (10) zum fluidischen Anschließen mehrerer mobiler Reinigungsgeräte (20, 30),
   wobei die Basisstation (10) zum gleichzeitigen Entleeren der Reinigungsgeräte (20, 30) und/oder zum gleichzeitigen Befüllen der Reinigungsgeräte (20, 30) mit einem Reinigungsmittel ausgebildet ist, und/oder
   wobei die Basisstation (10) eine Filtereinrichtung (70) gemäß einem der Aspekte 12 bis 15 aufweist.
9. Basisstation nach Aspekt 8, wobei die Basisstation (10) ein Bodenmodul (40) und ein fluidisch mit dem Bodenmodul (40) verbundenes Kopfmodul (50) aufweist, wobei das Bodenmodul (40) einen fluidischen, insbesondere pneumatischen, Anschluss (40F) für ein erstes Reinigungsgerät (20) und/oder das Kopfmodul (50) einen fluidischen, insbesondere pneumatischen, Anschluss (50F) für ein zweites Reinigungsgerät (30) aufweist.
10. Basisstation nach Aspekt 8 oder 9, wobei die Basisstation (10) eine Arbeitsmaschine (50J), insbesondere ein Gebläse und/oder eine Pumpe, für den Fluidaustausch mit den Reinigungsgeräten (20, 30) aufweist.
11. Basisstation nach Aspekt 10, wobei die Basisstation (10) mindestens eine Absperreinrichtung (10E, 10M) aufweist, um die Arbeitsmaschine (50J) wahlweise mit einem oder mehreren Reinigungsgeräten (20, 30) fluidisch zu verbinden.
12. Filtereinrichtung (70) für eine Basisstation (10) gemäß einem der Aspekte 8 bis 11,
   wobei die Filtereinrichtung (70) mehrere Anschlussöffnungen (70E, 70F) zum Befüllen der Filtereinrichtung (70) aufweist.
13. Filtereinrichtung nach Aspekt 12, wobei die Filtereinrichtung (70) mehrere Rückschlagklappen (70G, 70H) aufweist, wobei jeder Anschlussöffnung (70E, 70F) eine Rückschlagklappe (70G, 70H) zugeordnet ist.
14. Filtereinrichtung nach Aspekt 12 oder 13, wobei die Anschlussöffnungen (70E, 70F) auf unterschiedlichen Seiten der Filtereinrichtung (70) angeordnet sind.
15. Filtereinrichtung nach einem der Aspekte 12 bis 14, wobei die Filtereinrichtung (70) eine Trennwand (70J) aufweist, die die Filtereinrichtung (70) in zwei Kammern (70K, 70L) unterteilt, wobei jede Kammer (70K, 70L) eine der Anschlussöffnungen (70E, 70F) aufweist.

### Bezugszeichenliste:

| | | | |
|---|---|---|---|
| 1 | Reinigungssystem | 40B | Fußteil |
| 2 | Wand | 40C | Rückwand |
| 3 | Boden | 40D | Oberteil |
| 4 | Mobilgerät | 40E | elektrischer Anschluss |
| 5 | Zentraleinrichtung | 40F | fluidischer Anschluss |
| 10 | Basisstation | 40G | Behälter |
| 10A | Netzteil | 40H | Filter |
| 10B | Stromanschluss | 40J | Arbeitsmaschine |
| 10C | Halterung | 50 | Kopfmodul |
| 10D | Klappe | 50A | Gehäuse |
| 10E | (erste) Absperreinrichtung | 50C | Vorderseite |
| 10F | Steuergerät | 50E | elektrischer Anschluss |
| 10J | erste Zuleitung | 50F | fluidischer Anschluss |
| 10K | zweite Zuleitung | 50G | Behälter |
| 10L | Absaugleitung | 50H | Filter |
| 10M | zweite Absperreinrichtung | 50J | Arbeitsmaschine |
| 10N | erster Sensor | 50K | Halterung |
| 10P | zweiter Sensor | 50L | erstes Halteteil |
| 10Q | Kommunikationseinrichtung | 50M | zweites Halteteil |
| 10R | Datenverarbeitungseinrichtung | 70 | Filtereinrichtung |
| 20 | erstes Reinigungsgerät | 70A | erstes Anschlussteil |
| 20A | Akkumulator | 70B | zweites Anschlussteil |
| 20B | elektrischer Anschluss | 70C | Filterelement |
| 20C | Sammelbehälter | 70D | Filterraum |
| 20Q | erstes Kommunikationsgerät | 70E | erste Anschlussöffnung |
| 30 | zweites Reinigungsgerät | 70F | zweite Anschlussöffnung |
| 30A | Akkumulator | 70G | erste Rückschlagklappe |
| 30B | elektrischer Anschluss | 70H | zweite Rückschlagklappe |
| 30C | Sammelbehälter | 70J | Trennwand |
| 30Q | zweites Kommunikationsgerät | 70K | erste Filterkammer |
| | | 70L | zweite Filterkammer |
| 40 | Bodenmodul | | |
| 40A | Aufnahme | A | Hauptachse |

## Patentansprüche

1. Verfahren zum Betreiben eines Reinigungssystems (1) mit mehreren mobilen Reinigungsgeräten (20, 30) und einer Basisstation (10) für die Reinigungsgeräte (20, 30),
**dadurch gekennzeichnet,**
**dass** die Reinigungsgeräte (20, 30) gemäß einer Priorisierung von der Basisstation (10) entleert und/oder mit einem Reinigungsmittel befüllt werden, wobei ein Entleeren und/oder Befüllen eines ersten Reinigungsgeräts (20) gestartet oder fortgesetzt wird, wenn ein zweites Reinigungsgerät (30) vollständig entleert bzw. befüllt wurde und/oder in Benutzung ist.

2. Verfahren nach Anspruch 1, **dadurch gekennzeichnet, dass** die Reinigungsgeräte (20, 30) nacheinander entleert bzw. befüllt werden.

3. Verfahren nach Anspruch 1 oder 2, **dadurch gekennzeichnet, dass** ein erstes Reinigungsgerät (20) nachrangig und/oder ein zweites Reinigungsgerät (30) vorrangig mittels der Basisstation (10) entleert und/oder befüllt wird.

4. Verfahren nach einem der voranstehenden Ansprüche, **dadurch gekennzeichnet, dass** die Basisstation (10) eine Absperreinrichtung (10E) aufweist, um die Luftführung zu steuern, wobei mittels der Absperreinrichtung (10E) wahlweise das erste Reinigungsgerät (20) oder das zweite Reinigungsgerät (30) fluidisch mit einem Behälter (50G) der Basisstation (10) verbindbar ist.

5. Verfahren nach einem der voranstehenden Ansprüche, **dadurch gekennzeichnet, dass** die Basisstation (10) zwei Absperreinrichtungen (10E, 10M) aufweist, um die Luftführung in der Basisstation (10) zu ändern, vorzugsweise wobei die Absperreinrichtungen (10E, 10M) unabhängig voneinander gesteuert werden.

6. Verfahren nach Anspruch 5, **dadurch gekennzeichnet, dass** die Absperreinrichtungen (10E, 10M) in Abhängigkeit vom Füllstand der Sammelbehälter (20C, 30C) der Reinigungsgeräte (20, 30) automatisch geschlossen werden.

7. Verfahren nach Anspruch 5 oder 6, **dadurch gekennzeichnet, dass** zunächst eine Absperreinrichtung (10E, 10M) und anschließend eine andere Absperreinrichtung (10E, 10M) betätigt wird, um zunächst ein Reinigungsgerät (20, 30) und anschließend ein anderes Reinigungsgerät (20, 30) zu entleeren/auszusaugen.

8. Verfahren nach einem der Ansprüche 5 bis 7, **dadurch gekennzeichnet, dass** die erste Absperreinrichtung (10E) geschlossen bzw. der Aussaugvorgang des ersten Reinigungsgeräts (20) unterbrochen und stattdessen die zweite Absperreinrichtung (10M) geöffnet bzw. der Aussaugvorgang des zweiten Reinigungsgeräts (30) gestartet, wenn das zweite Reinigungsgerät (30) an die Basisstation (20) angeschlossen wird, um ausschließlich bzw. vorrangig das zweite Reinigungsgerät (30) auszusaugen.

9. Verfahren nach Anspruch 8, **dadurch gekennzeichnet, dass** der Aussaugvorgang des ersten Reinigungsgeräts (20) gestartet/fortgesetzt bzw. die erste Absperreinrichtung (10E) geöffnet wird, erst wenn der Aussaugvorgang des zweiten Reinigungsgeräts (30) abgeschlossen ist bzw. das zweite Reinigungsgerät (30) vollständig entleert ist.

10. Verfahren nach einem der voranstehenden Ansprüche, **dadurch gekennzeichnet, dass** ein Entleeren und/oder Befüllen der Reinigungsgeräte (20, 30) in Abhängigkeit vom Füllstand der Reinigungsgeräte (20, 30) gestartet oder beendet wird.

11. Verfahren nach einem der voranstehenden Ansprüche, **dadurch gekennzeichnet, dass** ein Entleeren und/oder Befüllen eines ersten Reinigungsgeräts (20) mittels eines zweiten Reinigungsgeräts (30) und/oder eines Mobilgeräts (4) gesteuert wird.

12. Basisstation (10) zum fluidischen Anschließen mehrerer mobiler Reinigungsgeräte (20, 30),
**dadurch gekennzeichnet,**
**dass** die Basisstation (10) zum Entleeren der Reinigungsgeräte (20, 30) und/oder zum Befüllen der Reinigungsgeräte (20, 30) mit einem Reinigungsmittel gemäß einer elektronisch gespeicherten Priorisierung ausgebildet ist, und
**dass** die Basisstation (10) dazu ausgebildet ist, ein Entleeren und/oder Befüllen eines ersten Reinigungsgeräts (20) erst dann zu starten, wenn ein zweites Reinigungsgerät (30) vollständig entleert bzw. befüllt ist oder von einem Nutzer benutzt wird.

13. Basisstation nach Anspruch 12, **dadurch gekennzeichnet, dass** die Basisstation (10) ein Bodenmodul (40) und ein fluidisch mit dem Bodenmodul (40) verbundenes Kopfmodul (50) aufweist, wobei das Bodenmodul (40) einen fluidischen, insbesondere pneumatischen, Anschluss (40F) für ein erstes Reinigungsgerät (20) und/oder das Kopfmodul (50) einen fluidischen, insbesondere pneumatischen, Anschluss (50F) für ein zweites Reinigungsgerät (30) aufweist.

14. Basisstation nach Anspruch 12 oder 13, **dadurch gekennzeichnet, dass** die Basisstation (10) eine Arbeitsmaschine (50J), insbesondere ein Gebläse und/oder eine Pumpe, für den Fluidaustausch mit den Reinigungsgeräten (20, 30) aufweist, wobei die Basisstation (10) mindestens eine Absperreinrichtung (10E, 10M) aufweist, um die Arbeitsmaschine (50J) wahlweise mit einem oder mehreren Reinigungsgeräten (20, 30) fluidisch zu verbinden.

## Claims

1. Method for operating a cleaning system (1) with a plurality of mobile cleaning devices (20, 30) and a base station (10) for the cleaning devices (20, 30),
**characterized**
**in that** the cleaning devices (20, 30) are emptied and/or filled with a cleaning agent by the base station (10) according to a prioritization, wherein emptying and/or filling of a first cleaning device (20) is started or continued when a second cleaning device (30) has been completely emptied and/or filled and/or is in use.

2. Method according to claim 1, **characterized in that** the cleaning devices (20, 30) are emptied and/or filled one after the other.

3. Method according to claim 1 or 2, **characterized in that** a first cleaning device (20) is emptied and/or filled by means of the base station (10) subordinated and/or a second cleaning device (30) is emptied and/or filled by means of the base station (10) with priority.

4. Method according to any one of the preceding claims, **characterized in that** the base station (10) has a shut-off apparatus (10E) to control the air flow, wherein by means of the shut-off apparatus (10E) selectively the first cleaning device (20) or the second cleaning device (30) is connectable to a container (50G) of the base station (10).

5. Method according to any one of the preceding claims, **characterized in that** the base station (10) has two shut-off devices (10E, 10M) to change the air flow in the base station (10), preferably wherein the shut-off devices (10E, 10M) are controlled independently of each other.

6. Method according to claim 5, **characterized in that** the shut-off devices (10E, 10M) are automatically closed as a function of the filling level of the collecting containers (20C, 30C) of the cleaning devices (20, 30).

7. Method according to claim 5 or 6, **characterized in that** first one shut-off apparatus (10E, 10M) and subsequently another shut-off apparatus (10E, 10M) is actuated, to first empty/suck out one cleaning device (20, 30) and subsequently another cleaning device (20, 30).

8. Method according to any one of claims 5 to 7, **characterized in that** the first shut-off apparatus (10E) is closed and/or the suction process of the first cleaning device (20) is interrupted and instead the second shut-off apparatus (10M) is opened and/or the suction process of the second cleaning device (30) is started, when the second cleaning device (30) is connected to the base station (20) to exclusively and/or prioritized suck out the second cleaning device (30).

9. Method according to claim 8, **characterized in that** the suction process of the first cleaning device (20) is started/continued and/or the first shut-off apparatus (10E) is opened only when the suction process of the second cleaning device (30) is completed and/or the second cleaning device (30) is completely emptied.

10. Method according to any one of the preceding claims, **characterized in that** emptying and/or filling of the cleaning devices (20, 30) is started or ended depending on the filling level of the cleaning devices (20, 30).

11. Method according to any one of the preceding claims, **characterized in that** emptying and/or filling of a first cleaning device (20) is controlled by means of a second cleaning device (30) and/or a mobile device (4).

12. Base station (10) for fluidically connecting of a plurality of mobile cleaning devices (20, 30),
**characterized**
**in that** the base station (10) is configured for emptying the cleaning devices (20, 30) and/or for filling the cleaning devices (20, 30) with a cleaning agent according to an electronically saved prioritization, and
**in that** the base station (10) is configured to start emptying and/or filling of a first cleaning device (20) only when a second cleaning device (30) is completely emptied and/or filled or is used by a user.

13. Base station according to claim 12, **characterized in that** the base station (10) has a bottom module (40) and a head module (50) fluidically connected to the bottom module (40), the bottom module (40) having a fluidic, in particular pneumatic, connection (40F) for a first cleaning device (20) and/or the head module (50) having a fluidic, in particular pneumatic, connection (50F) for a second cleaning device (30).

14. Base station according to claim 12 or 13, **characterized in that** the base station (10) has a working machine (50J), in particular a blower and/or a pump, for fluid exchange with the cleaning devices (20, 30), wherein the base station (10) has at least one shut-off apparatus (10E, 10M) for fluidically connecting the working machine (50J) selectively to one or more cleaning devices (20, 30).

## Revendications

1. Procédé de fonctionnement d'un système de nettoyage (1) comprenant plusieurs appareils de nettoyage mobiles (20, 30) et une station de base (10) pour les appareils de nettoyage (20, 30),
**caractérisé**
**en ce que** les appareils de nettoyage (20, 30) sont, selon une priorisation, vidés et/ou remplis d'un produit de nettoyage par la station de base (10), un vidage et/ou un remplissage d'un premier appareil de nettoyage (20) étant démarré ou poursuivi lorsqu'un deuxième appareil de nettoyage (30) a été complètement vidé et/ou rempli et/ou est en utilisation.

2. Procédé selon la revendication 1, **caractérisé en ce que** les appareils de nettoyage (20, 30) sont vidés et/ou remplis successivement.

3. Procédé selon la revendication 1 ou 2, **caractérisé en ce qu'**un premier appareil de nettoyage (20) est vidé et/ou rempli en priorité inférieure et/ou un deuxième appareil de nettoyage (30) est vidé et/ou rempli en priorité supérieure au moyen de la station de base (10).

4. Procédé selon l'une quelconque des revendications précédentes, **caractérisé en ce que** la station de base (10) présente un dispositif d'arrêt (10E) pour commander le guidage d'air, le premier appareil de nettoyage (20) ou le deuxième appareil de nettoyage (30) pouvant être relié fluidiquement au choix à un récipient (50G) de la station de base (10) au moyen du dispositif d'arrêt (10E).

5. Procédé selon l'une quelconque des revendications précédentes, **caractérisé en ce que** la station de base (10) présente deux dispositifs d'arrêt (10E, 10M) pour modifier le guidage d'air dans la station de base (10), les dispositifs d'arrêt (10E, 10M) étant de préférence commandés indépendamment l'un de l'autre.

6. Procédé selon la revendication 5, **caractérisé en ce que** les dispositifs d'arrêt (10E, 10M) sont fermés automatiquement en fonction du niveau de remplissage des récipients collecteurs (20C, 30C) des appareils de nettoyage (20, 30).

7. Procédé selon la revendication 5 ou 6, **caractérisé en ce qu'**un dispositif d'arrêt (10E, 10M) est d'abord actionné puis un autre dispositif d'arrêt (10E, 10M) est actionné pour vider/aspirer d'abord un appareil de nettoyage (20, 30) puis un autre appareil de nettoyage (20, 30).

8. Procédé selon l'une quelconque des revendications 5 à 7, **caractérisé en ce que** le premier dispositif d'arrêt (10E) est fermé et/ou le processus d'aspiration du premier appareil de nettoyage (20) est interrompu et, à la place, le deuxième dispositif d'arrêt (10M) est ouvert et/ou le processus d'aspiration du deuxième appareil de nettoyage (30) est démarré lorsque le deuxième appareil de nettoyage (30) est raccordé à la station de base (20) pour aspirer exclusivement et/ou en priorité le deuxième appareil de nettoyage (30).

9. Procédé selon la revendication 8, **caractérisé en ce que** le processus d'aspiration du premier appareil de nettoyage (20) n'est démarré/poursuivi et/ou le premier dispositif d'arrêt (10E) n'est ouvert que lorsque le processus d'aspiration du deuxième appareil de nettoyage (30) est terminé et/ou que le deuxième appareil de nettoyage (30) est complètement vidé.

10. Procédé selon l'une quelconque des revendications précédentes, **caractérisé en ce qu'**un vidage et/ou un remplissage des appareils de nettoyage (20, 30) est démarré ou terminé en fonction du niveau de remplissage des appareils de nettoyage (20, 30).

11. Procédé selon l'une quelconque des revendications précédentes, **caractérisé en ce qu'**un vidage et/ou un remplissage d'un premier appareil de nettoyage (20) est commandé au moyen d'un deuxième appareil de nettoyage (30) et/ou d'un appareil mobile (4).

12. Station de base (10) pour le raccordement fluidique de plusieurs appareils de nettoyage mobiles (20, 30),
**caractérisée**
**en ce que** la station de base (10) est conçue pour vider les appareils de nettoyage (20, 30) et/ou pour remplir les appareils de nettoyage (20, 30) d'un produit de nettoyage selon une priorisation mémorisée électroniquement, et
**en ce que** la station de base (10) est conçue pour démarrer un vidage et/ou un remplissage d'un premier appareil de nettoyage (20) uniquement lorsqu'un deuxième appareil de nettoyage (30) est complètement vidé et/ou rempli ou est utilisé par un utilisateur.

13. Station de base selon la revendication 12, **caractérisée en ce que** la station de base (10) présente un module de fond (40) et un module de tête (50) relié fluidiquement au module de fond (40), le module de fond (40) présentant un raccordement (40F) fluidique, en particulier pneumatique, pour un premier appareil de nettoyage (20) et/ou le module de tête (50) présentant un raccordement (50F) fluidique, en particulier pneumatique, pour un deuxième appareil de nettoyage (30).

14. Station de base selon la revendication 12 ou 13, **caractérisée en ce que** la station de base (10) présente une machine de travail (50J), en particulier une soufflante et/ou une pompe, pour l'échange de fluide avec les appareils de nettoyage (20, 30), la station de base (10) présentant au moins un dispositif d'arrêt (10E, 10M) pour relier fluidiquement la machine de travail (50J) au choix à un ou plusieurs appareils de nettoyage (20, 30).
